# EUROPEAN PATENT APPLICATION

(11) **EP 4 611 427 A1**
(43) Date of publication of application: **03.09.2025**
(21) Application number: 23881838.9
(22) Date of filing: 24.10.2023
(51) Int. Cl.: H04W 28/02

(54) **METHOD AND APPARATUS USED IN COMMUNICATION NODE FOR WIRELESS COMMUNICATION**

(30) Priority: 27.10.2022 CN 202211323793
(71) Applicant: Apogee Networks, LLC, Dallas, TX 75201 (US)
(72) Inventor: YU, Qiaoling, Shanghai 201206 (CN); ZHANG, Xiaobo, Shanghai 201206 (CN)
(74) Representative: Gunzelmann, Rainer
(86) International application number: PCT/CN2023/126239
(87) International publication number: WO 2024/088260

(57) **Abstract**

Disclosed in the present application are a method and apparatus used in a communication node for wireless communication. The method comprises: a communication node receiving first signaling, wherein the first signaling indicates a first time length of a first timer; triggering a first SR as a response to a first buffer status report being triggered; sending a first SR signal; and as the first SR signal is sent, starting the first timer only when the first buffer status report is the former one of a first-type buffer status report and a second-type buffer status report, or, as the first SR signal is sent, starting the first timer, and setting the first timer to the first time length only when the first buffer status report is the former one of the first-type buffer status report and the second-type of buffer status report, wherein the running state of the first timer is used for determining whether to send an SR signal for the first SR, the first-type buffer status report comprises a regular BSR, and the second-type buffer status report is different from the first-type buffer status report.

## Description

### Technical Field

This application relates to a transmission method and apparatus in a wireless communication system, and to a method and apparatus for a service with a large data volume, especially a service with a high rate and a low delay.

### Related Art

Application scenarios of a future wireless communication system are increasingly diversified, and different application scenarios put different performance requirements on the system. To satisfy different performance requirements of various application scenarios, at the 3rd Generation Partner Project (3GPP) Radio Access Network (RAN) #72 plenary meeting, the New Radio (NR) technology was decided to be studied, and at the 3GPP RAN #75 plenary meeting, the Work Item (WI) of NR was approved and standardization of NR was started. XR is an important research direction of Release 18 (R18).

### SUMMARY

In an existing protocol, a buffer status reporting (BSR) process is used for providing data volume information, and data volume information carried by a BSR MAC CE is used for resource allocation. An XR service includes a VR (virtual reality) service, an AR (augmented reality), and a CG (cloud game) service, has features of a high rate and a low delay, is also an interactive service, and has a strict requirement on a service response time. For example, gesture information of a user is transmitted to a server, and an image fed back by the server needs to be presented on a terminal of the user within a very short time; otherwise, the user feels an evident delay, affecting user experience. The XR service includes various data, for example, a video, an audio, and data used for controlling various sensors. The information has a dependency relationship, and a data packet having a dependency relationship is discarded due to another data packet. An existing buffer status reporting mechanism cannot satisfy a requirement of the XR service, and therefore, the buffer status reporting mechanism needs to be enhanced.

In view of the foregoing problem, this application provides a buffer status reporting solution. An XR service is used as an example in the description for the foregoing problem. This application is also equally applicable to, for example, another scenario of a service with a high data rate. Further, although this application provides a specific implementation for XR, this application can also be applied to an LTE scenario, to achieve a technical effect similar to NR. Further, although an original intention of this application is aimed at a Uu air interface, this application can also be applied to a PC5 interface. Further, although the original intention of this application is aimed at a scenario of a terminal and a base station, this application is also equally applicable to a scenario of Vehicle-to-Everything (V2X), a communication scenario between a terminal and a relay, and a communication scenario between a relay and a base station, to achieve a technical effect similar to that in the scenario of a terminal and a base station. Further, although the original intention of this application is aimed at the scenario of a terminal and a base station, this application is also equally applicable to a communication scenario of Integrated Access and Backhaul (IAB), to achieve a technical effect similar to that in the scenario of a terminal and a base station. Further, although the original intention of this application is aimed at a Terrestrial Network (TN) scenario, this application is also equally applicable to a Non-Terrestrial Network (NTN) communication scenario, to achieve a technical effect similar to that in the TN scenario. In addition, using a unified solution in different scenarios further helps reduce hardware complexity and costs.

As an embodiment, the terminology in this application is interpreted with reference to the definitions in the 3GPP TS36 series.

As an embodiment, the terminology in this application is interpreted with reference to the definitions in the 3GPP TS38 series.

As an embodiment, the terminology in this application is interpreted with reference to the definitions in the 3GPP TS37 series.

As an embodiment, the terminology in this application is interpreted with reference to the definitions in specification protocols of the Institute of Electrical and Electronics Engineers (IEEE).

It should be noted that, in the absence of conflict, an embodiment of any node in this application and a feature in the embodiment may be applied to any other node. In the absence of conflict, embodiments of this application and features in the embodiments may be combined with each other arbitrarily.

This application discloses a method used in a first node for wireless communication, including:
triggering a first SR as a response to a first buffer status report being triggered; determining, as a response to any condition in a first condition set being satisfied, that an SR transmission on a first PUCCH resource is a prioritized SR transmission after the first SR is triggered, and sending a first SR signal,
where the first PUCCH resource is used for sending the first SR signal; the first condition set includes at least a first condition and a second condition; the first condition is that the first PUCCH resource does not overlap with any SL-SCH resource and the first PUCCH resource does not overlap with any UL-SCH resource; and the second condition includes that the first PUCCH resource overlaps with a second resource block, where the second resource block is used for shared channel transmission; the second condition is related to whether the first buffer status report triggering the first SR is the latter one of a first-type buffer status report or a second-type buffer status report; and the first-type buffer status report includes a regular BSR, and the second-type buffer status report is different from the first-type buffer status report.

This application discloses a method used in a first node for wireless communication, including:
receiving first signaling, where the first signaling indicates a first time length of a first timer;
triggering a first scheduling request (SR) as a response to a first buffer status report being triggered; and sending a first SR signal after the first SR is triggered, where the first timer is started with the behavior of sending the first SR signal, and whether the first timer is set to the first time length is related to a type of the first buffer status report,
where the phrase about whether the first timer is set to the first time length is related to a type of the first buffer status report includes: setting the first timer to the first time length only when the first buffer status report is the former one of the first-type buffer status report and the second-type buffer status report, where a running state of the first timer is used for determining whether to send an SR signal for the first SR; and the first-type buffer status report includes a regular BSR, and the second-type buffer status report is different from the first-type buffer status report.

As an embodiment, problems to be resolved in this application include: How to shorten a time interval in which the SR transmission for the first SR is prevented.

As an embodiment, problems to be resolved in this application include: When the first time length is configured, how to shorten a time interval in which the SR transmission for the first SR is prevented.

As an embodiment, problems to be resolved in this application include: How to avoid packet loss of data triggering the second-type buffer status report.

As an embodiment, problems to be resolved in this application include: How to shorten a transmission delay of data triggering the second-type buffer status report.

As an embodiment, the foregoing method is characterized by including: setting the first timer to the first time length only when the first buffer status report is the former one of the first-type buffer status report and the second-type buffer status report.

As an embodiment, the foregoing method is characterized by including: skipping setting the first timer to the first time length when the first buffer status report is the latter one of the first-type buffer status report and the second-type buffer status report.

As an embodiment, the foregoing method is advantageous in including: avoiding packet loss.

As an embodiment, the foregoing method is advantageous in including: shortening a transmission delay.

According to one aspect of this application, the behavior about whether to start the first timer is related to a type of the first buffer status report includes: skipping starting the first timer when the first buffer status report is the latter one of the first-type buffer status report and the second-type buffer status report.

According to one aspect of this application, the method includes:
increasing a first counter by 1 with the behavior of sending the first SR signal; and initiate a random access procedure as a response to the first counter reaching a target integer,
where the target integer is related to the type of the first buffer status report; and the target integer is a first integer when the first buffer status report is the first-type buffer status report; or the target integer is a second integer when the first buffer status report is the second-type buffer status report.

According to one aspect of this application, the method includes:
triggering the second-type buffer status report as a response to a first data packet set being valid; and execute a first action set as a response to at least the first data packet set being discarded, where the first action set includes at least one of canceling the second-type buffer status report or canceling the first SR; and
where the first data packet set includes at least one data packet, and each data packet in the first data packet set is a data packet above a MAC sublayer.

According to one aspect of this application, the method includes:
determining, as a response to any condition in a first condition set being satisfied, that an SR transmission on a first physical uplink control channel (PUCCH) resource is a prioritized SR transmission,
where the first PUCCH resource is used for sending the first SR signal; the first condition set includes at least a first condition and a second condition; the first condition is that the first PUCCH resource does not overlap with any sidelink shared channel (SL-SCH) resource and the first PUCCH resource does not overlap with any uplink shared channel (UL-SCH) resource; and the second condition includes that the first PUCCH resource overlaps with a second resource block, where the second resource block is used for shared channel transmission.

This application discloses a method used in a first node for wireless communication, including:
receiving first signaling, where the first signaling indicates a first time length of a first timer;
triggering a first SR as a response to a first buffer status report being triggered; and sending a first SR signal after the first SR is triggered, where with the behavior of sending the first SR signal, whether to start the first timer is related to a type of the first buffer status report;
where the behavior about whether to start the first timer is related to a type of the first buffer status report includes: starting the first timer only when the first buffer status report is the former one of a first-type buffer status report and a second-type buffer status report; and a running state of the first timer is used for determining whether to send an SR signal for the first SR; and the first-type buffer status report includes a regular BSR, and the second-type buffer status report is different from the first-type buffer status report.

As an embodiment, problems to be resolved in this application include: How to shorten a time interval in which the SR transmission for the first SR is prevented.

As an embodiment, problems to be resolved in this application include: When the first time length is configured, how to shorten a time interval in which the SR transmission for the first SR is prevented.

As an embodiment, problems to be resolved in this application include: How to avoid packet loss of data triggering the second-type buffer status report.

As an embodiment, problems to be resolved in this application include: How to shorten a transmission delay of data triggering the second-type buffer status report.

As an embodiment, the foregoing method is characterized by including: starting the first timer only when the first buffer status report is the former one of a first-type buffer status report and a second-type buffer status report.

As an embodiment, the foregoing method is characterized by including: skipping starting the first timer only when the first buffer status report is the latter one of the first-type buffer status report and the second-type buffer status report.

As an embodiment, the foregoing method is advantageous in including: avoiding packet loss.

As an embodiment, the foregoing method is advantageous in including: shortening a transmission delay.

According to one aspect of this application, the method includes:
receiving second signaling, where the second signaling indicates a second time length of the first timer; and
the behavior about whether to apply the first time length is related to a type of the first buffer status report includes: setting the first timer to the second time length when the first buffer status report is the latter one of the first-type buffer status report and the second-type buffer status report.

According to one aspect of this application, the method includes:
increasing a first counter by 1 with the behavior of sending the first **SR** signal; and initiate a random access procedure as a response to the first counter reaching a target integer,
where the target integer is related to the type of the first buffer status report; and the target integer is a first integer when the first buffer status report is the first-type buffer status report; or the target integer is a second integer when the first buffer status report is the second-type buffer status report.

According to one aspect of this application, the method includes:
triggering the second-type buffer status report as a response to a first data packet set being valid; and execute a first action set as a response to at least the first data packet set being discarded, where the first action set includes at least one of canceling the second-type buffer status report or canceling the first SR; and
the first data packet set includes at least one data packet, and each data packet in the first data packet set is a data packet above a MAC sublayer.

According to one aspect of this application, the method includes:
determining, as a response to any condition in a first condition set being satisfied, that an SR transmission on a first PUCCH resource is a prioritized SR transmission,
where the first PUCCH resource is used for sending the first SR signal; the first condition set includes at least a first condition and a second condition; the first condition is that the first PUCCH resource does not overlap with any SL-SCH resource and the first PUCCH resource does not overlap with any UL-SCH resource; and the second condition includes that the first PUCCH resource overlaps with a second resource block, where the second resource block is used for shared channel transmission.

This application discloses a method used in a second node for wireless communication, including:
receiving a first SR signal,
where a first SR is triggered as a response to a first buffer status report being triggered; it is determined, as a response to any condition in a first condition set being satisfied, that an SR transmission on a first PUCCH resource is a prioritized SR transmission after the first SR is triggered, and the first SR is sent, where the first PUCCH resource is used for sending the first SR signal; the first condition set includes at least a first condition and a second condition; the first condition is that the first PUCCH resource does not overlap with any SL-SCH resource and the first PUCCH resource does not overlap with any UL-SCH resource; and the second condition includes that the first PUCCH resource overlaps with a second resource block, where the second resource block is used for shared channel transmission; the second condition is related to whether the first buffer status report triggering the first SR is the latter one of a first-type buffer status report or a second-type buffer status report; and the first-type buffer status report includes a regular BSR, and the second-type buffer status report is different from the first-type buffer status report.

This application discloses a method used in a second node for wireless communication, including:
sending first signaling, where the first signaling indicates a first time length of a first timer; and
receiving a first SR signal,
where a first SR is triggered as a response to a first buffer status report being triggered; the first SR signal is sent after the first SR is triggered; a running state of the first timer is used for determining whether to send an SR signal for the first SR; and the first-type buffer status report includes a regular BSR, and the second-type buffer status report is different from the first-type buffer status report.

As an embodiment, as the first SR signal is sent, whether the first timer is started is related to a type of the first buffer status report; the phrase about whether the first timer is started is related to a type of the first buffer status report includes: starting the first timer only when the first buffer status report is the former one of a first-type buffer status report and a second-type buffer status report.

As an embodiment, the first timer is started as the first SR signal is sent, and whether the first timer is set to the first time length is related to a type of the first buffer status report; the phrase about whether the first timer is set to the first time length is related to a type of the first buffer status report includes: setting the first timer to the first time length only when the first buffer status report is the former one of the first-type buffer status report and the second-type buffer status report.

According to one aspect of this application, the phrase about whether the first timer is started is related to a type of the first buffer status report includes: skipping starting the first timer when the first buffer status report is the latter one of the first-type buffer status report and the second-type buffer status report.

According to one aspect of this application, the method includes:
sending second signaling, where the second signaling indicates a second time length of the first timer; and
the behavior about whether to apply the first time length is related to a type of the first buffer status report includes: setting the first timer to the second time length when the first buffer status report is the latter one of the first-type buffer status report and the second-type buffer status report.

According to one aspect of this application, a first counter is increased by 1 as the first SR signal is sent; and a random access procedure is initiated as a response to the first counter reaching a target integer, where the target integer is related to the type of the first buffer status report; and the target integer is a first integer when the first buffer status report is the first-type buffer status report; or the target integer is a second integer when the first buffer status report is the second-type buffer status report.

According to one aspect of this application, the second-type buffer status report is triggered as a response to a first data packet set being valid; and a first action set is executed as a response to at least the first data packet set being discarded, where the first action set includes at least one of canceling the second-type buffer status report or canceling the first SR; and the first data packet set includes at least one data packet, and each data packet in the first data packet set is a data packet above a MAC sublayer.

According to one aspect of this application, it is determined, as a response to any condition in a first condition set being satisfied, that an SR transmission on a first PUCCH resource is a prioritized SR transmission, where the first PUCCH resource is used for sending the first SR signal; the first condition set includes at least a first condition and a second condition; the first condition is that the first PUCCH resource does not overlap with any SL-SCH resource and the first PUCCH resource does not overlap with any UL-SCH resource; and the second condition includes that the first PUCCH resource overlaps with a second resource block, where the second resource block is used for shared channel transmission.

This application discloses a first node used for wireless communication, including:
a first receiver, configured to receive first signaling, where the first signaling indicates a first time length of a first timer; and
a first transmitter, configured to trigger a first SR as a response to a first buffer status report being triggered; and send a first SR signal after the first SR is triggered, where with the behavior of sending the first SR signal, whether to start the first timer is related to a type of the first buffer status report;
where the behavior about whether to start the first timer is related to a type of the first buffer status report includes: starting the first timer only when the first buffer status report is the former one of a first-type buffer status report and a second-type buffer status report; and a running state of the first timer is used for determining whether to send an SR signal for the first SR; and the first-type buffer status report includes a regular BSR, and the second-type buffer status report is different from the first-type buffer status report.

This application discloses a first node used for wireless communication, including:
a first receiver, configured to receive first signaling, where the first signaling indicates a first time length of a first timer; and
a first transmitter, configured to trigger a first SR as a response to a first buffer status report being triggered; and send a first SR signal after the first SR is triggered, where the first timer is started with the behavior of sending the first SR signal, and whether the first timer is set to the first time length is related to a type of the first buffer status report,
where the phrase about whether the first timer is set to the first time length is related to a type of the first buffer status report includes: setting the first timer to the first time length only when the first buffer status report is the former one of the first-type buffer status report and the second-type buffer status report, where a running state of the first timer is used for determining whether to send an SR signal for the first SR; and the first-type buffer status report includes a regular BSR, and the second-type buffer status report is different from the first-type buffer status report.

This application discloses a first node used for wireless communication, including:
triggering a first SR as a response to a first buffer status report being triggered; determining, as a response to any condition in a first condition set being satisfied, that an SR transmission on a first PUCCH resource is a prioritized SR transmission after the first SR is triggered, and sending a first SR signal,
where the first PUCCH resource is used for sending the first SR signal; the first condition set includes at least a first condition and a second condition; the first condition is that the first PUCCH resource does not overlap with any SL-SCH resource and the first PUCCH resource does not overlap with any UL-SCH resource; and the second condition includes that the first PUCCH resource overlaps with a second resource block, where the second resource block is used for shared channel transmission; the second condition is related to whether the first buffer status report triggering the first SR is the latter one of a first-type buffer status report or a second-type buffer status report; and the first-type buffer status report includes a regular BSR, and the second-type buffer status report is different from the first-type buffer status report.

This application discloses a second node used for wireless communication, including:
a second transmitter, configured to send first signaling, where the first signaling indicates a first time length of a first timer; and
a second receiver, configured to receive a first SR signal,
where a first SR is triggered as a response to a first buffer status report being triggered; the first SR signal is sent after the first SR is triggered; a running state of the first timer is used for determining whether to send an SR signal for the first SR; and the first-type buffer status report includes a regular BSR, and the second-type buffer status report is different from the first-type buffer status report.

As an embodiment, as the first SR signal is sent, whether the first timer is started is related to a type of the first buffer status report; the phrase about whether the first timer is started is related to a type of the first buffer status report includes: starting the first timer only when the first buffer status report is the former one of a first-type buffer status report and a second-type buffer status report.

As an embodiment, the first timer is started as the first SR signal is sent, and whether the first timer is set to the first time length is related to a type of the first buffer status report; the phrase about whether the first timer is set to the first time length is related to a type of the first buffer status report includes: setting the first timer to the first time length only when the first buffer status report is the former one of the first-type buffer status report and the second-type buffer status report.

This application discloses a second node used for wireless communication, including:
receiving a first SR signal,
where a first SR is triggered as a response to a first buffer status report being triggered; it is determined, as a response to any condition in a first condition set being satisfied, that an SR transmission on a first PUCCH resource is a prioritized SR transmission after the first SR is triggered, and the first SR is sent, where the first PUCCH resource is used for sending the first SR signal; the first condition set includes at least a first condition and a second condition; the first condition is that the first PUCCH resource does not overlap with any SL-SCH resource and the first PUCCH resource does not overlap with any UL-SCH resource; and the second condition includes that the first PUCCH resource overlaps with a second resource block, where the second resource block is used for shared channel transmission; the second condition is related to whether the first buffer status report triggering the first SR is the latter one of a first-type buffer status report or a second-type buffer status report; and the first-type buffer status report includes a regular BSR, and the second-type buffer status report is different from the first-type buffer status report.

As an embodiment, compared with the conventional solution, this application has the following advantages:
- . reducing a time interval in which the first SR is prevented;
- . sending an SR signal in time and obtaining an uplink resource;
- . avoiding packet loss; and
- . shortening a transmission delay.

### BRIEF DESCRIPTION OF THE DRAWINGS

Other features, objectives, and advantages of this application will become more evident by reading detailed descriptions of non-limiting embodiments with reference to the following accompanying drawings.
FIG. 1 is a flowchart of transmission of first signaling, a first SR, and a first SR signal according to an embodiment of this application;
FIG. 2 is a schematic diagram of a network architecture according to an embodiment of this application;
FIG. 3 is a schematic diagram of an embodiment of a wireless protocol architecture of a user plane and a control plane according to an embodiment of this application;
FIG. 4 is a schematic diagram of a first communication device and a second communication device according to an embodiment of this application;
FIG. 5 is a flowchart of radio signal transmission according to an embodiment of this application;
FIG. 6 is a flowchart of a first counter according to an embodiment of this application;
FIG. 7 is a flowchart of executing a first action set according to an embodiment of this application;
FIG. 8 is a flowchart of determining that an SR transmission on a first PUCCH resource is a prioritized SR transmission according to an embodiment of this application;
FIG. 9 is a structural block diagram of a processing apparatus used in a first node according to an embodiment of this application;
FIG. 10 is a structural block diagram of a processing apparatus used in a first node according to an embodiment of this application;
FIG. 11 is a structural block diagram of a processing apparatus used in a second node according to an embodiment of this application.

### DETAILED DESCRIPTION

The technical solution of this application will be further described in detail below with reference to the accompanying drawings. It should be noted that, in the absence of conflict, embodiments of this application and features in the embodiments may be combined with each other arbitrarily.

### Embodiment 1

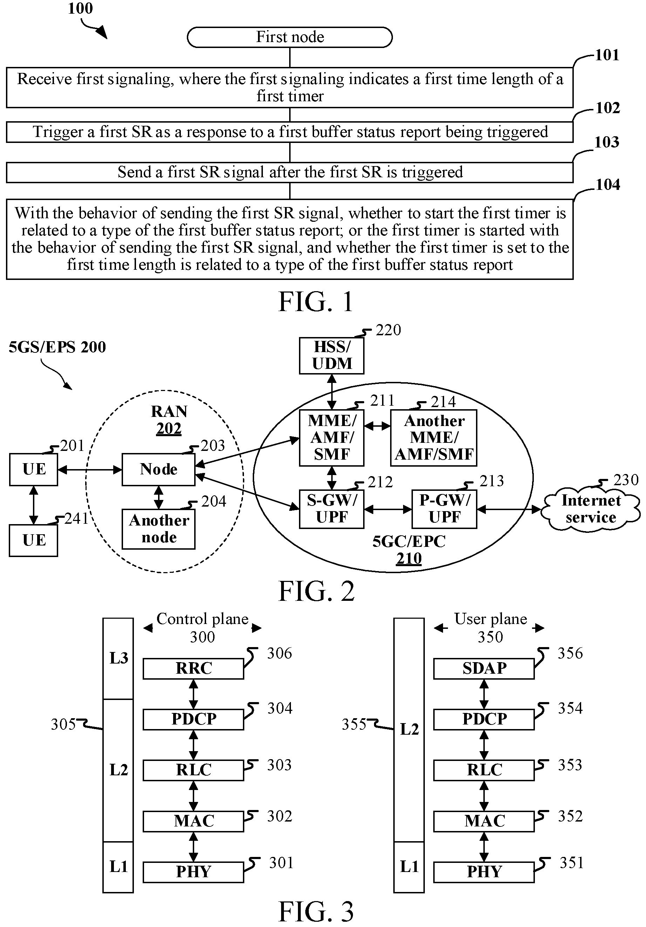

Embodiment 1 shows a flowchart of transmission of first signaling, a first SR, and a first SR signal according to an embodiment of this application, as shown in FIG. 1. In FIG. 1, each box represents a step. It should be particularly noted that a sequence of the boxes in the figure does not represent a time sequence of the represented steps.

In Embodiment 1, a first node in this application receives, in step 101, first signaling, where the first signaling indicates a first time length of a first timer; triggers, in step 102, a first SR as a response to a first buffer status report being triggered; sends, in step 103, a first SR signal after the first SR is triggered; in step 104, with the behavior of sending the first SR signal, whether to start the first timer is related to a type of the first buffer status report; or the first timer is started with the behavior of sending the first SR signal, and whether the first timer is set to the first time length is related to a type of the first buffer status report, where the behavior about whether to start the first timer is related to a type of the first buffer status report includes: starting the first timer only when the first buffer status report is the former one of a first-type buffer status report and a second-type buffer status report; and the phrase about whether the first timer is set to the first time length is related to a type of the first buffer status report includes: setting the first timer to the first time length only when the first buffer status report is the former one of the first-type buffer status report and the second-type buffer status report, where a running state of the first timer is used for determining whether to send an SR signal for the first SR; and the first-type buffer status report includes a regular BSR, and the second-type buffer status report is different from the first-type buffer status report.

As an embodiment, first signaling is received, where the first signaling indicates a first time length of a first timer; a first SR is triggered as a response to a first buffer status report being triggered; and a first SR signal is sent after the first SR is triggered, where with the behavior of sending the first SR signal, whether to start the first timer is related to a type of the first buffer status report; where the behavior about whether to start the first timer is related to a type of the first buffer status report includes: starting the first timer only when the first buffer status report is the former one of a first-type buffer status report and a second-type buffer status report; and a running state of the first timer is used for determining whether to send an SR signal for the first SR; and the first-type buffer status report includes a regular BSR, and the second-type buffer status report is different from the first-type buffer status report.

As an embodiment, a first SR is triggered as a response to a first-type buffer status report being triggered; and a first SR signal is sent after the first SR is triggered, where the first timer is started with the behavior of sending the first SR signal.

As an embodiment, a first SR is triggered as a response to a second-type buffer status report being triggered; and a first SR signal is sent after the first SR is triggered, where the first timer is not started with the behavior of sending the first SR signal.

As an embodiment, first signaling is received, where the first signaling indicates a first time length of a first timer; a first SR is triggered as a response to a first-type buffer status report being triggered; and a first SR signal is sent after the first SR is triggered, where the first timer is started with the behavior of sending the first SR signal; a running state of the first timer is used for determining whether to send an SR signal for the first SR; and the first-type buffer status report includes a regular BSR.

As an embodiment, first signaling is received, where the first signaling indicates a first time length of a first timer; a first SR is triggered as a response to a second-type buffer status report being triggered; and a first SR signal is sent after the first SR is triggered, where the first timer is not started with the behavior of sending the first SR signal; a running state of the first timer is used for determining whether to send an SR signal for the first SR; and the first-type buffer status report includes a regular BSR, and the second-type buffer status report is different from the first-type buffer status report.

As an embodiment, the first signaling explicitly indicates the first time length of the first timer.

As an embodiment, the first signaling implicitly indicates the first time length of the first timer.

As an embodiment, the first signaling is used for configuring the first time length of the first timer.

As an embodiment, the first signaling is used for determining the first time length of the first timer.

As an embodiment, the first signaling includes one MAC control element (CE), and the one MAC CE indicates the first time length of the first timer.

As an embodiment, the first signaling includes at least one Radio Resource Control (RRC) message.

As an embodiment, the first signaling includes at least one RRC information element (IE) in one RRC message.

As an embodiment, the first signaling includes at least one RRC field in one RRC message.

As an embodiment, the first signaling includes at least one RRC field in one RRC message.

As an embodiment, the first signaling includes a CellGroupConfig IE, and the CellGroupConfig IE is configured for a master cell group (MCG).

As an embodiment, the first signaling includes a CellGroupConfig IE, and the CellGroupConfig IE is configured for a secondary cell group (SCG).

As an embodiment, the first signaling includes a MAC-CellGroupConfig IE, and the MAC-CellGroupConfig IE is configured for the first MAC entity.

As an embodiment, the first signaling includes a SchedulingRequestConfig IE.

As an embodiment, the first signaling includes a schedulingRequestToAddModList field.

As an embodiment, the first signaling includes a SchedulingRequestToAddMod field.

As an embodiment, the first signaling includes a SchedulingRequestResourceConfig IE.

As an embodiment, the first signaling includes a first RRC field, and the first RRC field indicates the first time length of the first timer.

As a sub-embodiment of this embodiment, the first RRC field is an sr-ProhibitTimer field.

As a sub-embodiment of this embodiment, the first RRC field is used for configuring the first time length.

As a sub-embodiment of this embodiment, a candidate value of the first RRC field includes any one of 1 ms, 2 ms, 4 ms, 8 ms, 16 ms, 32 ms, 64 ms, or 128 ms.

As an embodiment, the first signaling includes a SchedulingRequestToAddMod, and the SchedulingRequestToAddMod field includes a SchedulingRequestId IE, the first RRC field, and an sr-TransMax field.

As an embodiment, the first signaling includes a SchedulingRequestResourceConfig IE, and the SchedulingRequestResourceConfig IE includes a SchedulingRequestId IE and a SchedulingRequestResourceId IE.

As an embodiment, the first signaling indicates a PUCCH resource used for carrying the first SR.

As an embodiment, a value of the SchedulingRequestId IE in the SchedulingRequestToAddMod field is equal to a value of the SchedulingRequestId IE in the SchedulingRequestResourceConfig IE.

As an embodiment, the first buffer status report is used for buffering a data report.

As an embodiment, the first buffer status report is used for reporting a buffer status.

As an embodiment, the first buffer status report is used for reporting a data volume.

As an embodiment, the first buffer status report is used for reporting a volume of buffered data.

As an embodiment, the first buffer status report is the first-type buffer status report.

As an embodiment, the first buffer status report is the second-type buffer status report.

As an embodiment, the first buffer status report is triggered by the first MAC entity of the first node.

As an embodiment, the first-type buffer status report includes a BSR.

As an embodiment, the first-type buffer status report is a regular BSR.

As an embodiment, the first-type buffer status report is used for reporting a data volume for each logical channel group (LCG).

As an embodiment, the first-type buffer status report is used for reporting a data volume for one LCG.

As an embodiment, the first-type buffer status report is used for reporting data volumes for a plurality of LCGs.

As an embodiment, the second-type buffer status report is used for reporting a data volume for a protocol data unit (PDU) set in one LCG.

As an embodiment, the second-type buffer status report is used for reporting a data volume for one PDU set.

As an embodiment, the second-type buffer status report is used for reporting a data volume for at least one PDU set.

As an embodiment, the second-type buffer status report is specific to at least one data packet set.

As an embodiment, the second-type buffer status report is specific to a logical channel to which at least one data packet set belongs.

As an embodiment, the second-type buffer status report is specific to an LCG with a logical channel to which at least one data packet set belongs.

As an embodiment, the second-type buffer status report is specific to only one data packet set.

As an embodiment, the second-type buffer status report is specific to a logical channel to which only one data packet set belongs.

As an embodiment, the second-type buffer status report is specific to an LCG with a logical channel to which only one data packet set belongs.

As an embodiment, the second-type buffer status report includes a BSR specific to a data packet set.

As an embodiment, the second-type buffer status report is not any one of a padding BSR or a periodic BSR.

As an embodiment, the second-type buffer status report is not of any BSR format introduced in 3GPP R17 or before 3GPP R17.

As a sub-embodiment of this embodiment, the second-type buffer status report is not any one of a regular BSR, a padding BSR, or a periodic BSR.

As a sub-embodiment of this embodiment, the second-type buffer status report is of a BSR format introduced in 3GPP R18 or after 3GPP R18.

As a sub-embodiment of this embodiment, the second-type buffer status report is an enhanced BSR.

As a sub-embodiment of this embodiment, the second-type buffer status report is an enhanced regular BSR.

As a sub-embodiment of this embodiment, the second-type buffer status report is a BSR specific to XR.

As a sub-embodiment of this embodiment, the second-type buffer status report is a BSR specific to a PDU set.

As an embodiment, at least one data packet set is used for triggering the second-type buffer status report.

As an embodiment, if uplink data does not include a data packet in any data packet set, the second-type buffer status report is not triggered.

As an embodiment, only when uplink data includes at least a data packet in a data packet set, the second-type buffer status report is triggered.

As an embodiment, if uplink data of one logical channel belonging to one LCG is valid for the first MAC entity, and a priority of a logical channel to which the uplink data belongs is higher than a priority of any logical channel of any LCG including the valid uplink data or no logical channel belonging to one LCG includes the valid uplink data, the first-type buffer status report is triggered.

As an embodiment, if uplink data of one logical channel belonging to one LCG is valid for the first MAC entity, no uplink data valid for the first MAC entity belongs to any data packet set, and a priority of a logical channel to which the uplink data belongs is higher than a priority of any logical channel of any LCG including the valid uplink data or no logical channel belonging to one LCG includes the valid uplink data, the first-type buffer status report is triggered.

As an embodiment, if uplink data in at least one data packet set is valid for the first MAC entity, the second-type buffer status report is triggered.

As an embodiment, if uplink data of one logical channel belonging to one LCG is valid for the first MAC entity, and the uplink data valid for the first MAC entity includes a data packet in at least one data packet set, the second-type buffer status report is triggered.

As an embodiment, if uplink data of one logical channel belonging to one LCG is valid for the first MAC entity, and the uplink data valid for the first MAC entity belongs to at least one data packet set, the second-type buffer status report is triggered.

As an embodiment, uplink data valid for the first MAC entity does not include any data packet set.

As an embodiment, uplink data valid for the first MAC entity includes only the first data packet set.

As an embodiment, uplink data valid for the first MAC entity includes at least the first data packet set.

As an embodiment, uplink data valid for the first MAC entity includes a plurality of data packet sets, and the first data packet set is one data packet set of the plurality of data packet sets.

As an embodiment, the first SR is one SR.

As an embodiment, the first SR is a pending SR.

As an embodiment, the first SR is pending.

As an embodiment, the first SR is considered as pending.

As an embodiment, the first SR shall be considered as pending.

As an embodiment, when the first SR is triggered, the first SR shall be considered as pending until the first SR is canceled.

As an embodiment, the first SR is considered as pending within a time interval from when the first SR is triggered to when the first SR signal is sent.

As an embodiment, the first SR is not canceled within a time interval from when the first SR is triggered to when the first SR signal is sent.

As an embodiment, the first SR is an SR triggered by the first buffer status report.

As an embodiment, the first SR is an SR available for the first buffer status report.

As an embodiment, the first SR is triggered after the first buffer status report is triggered.

As an embodiment, as a response to the first buffer status report being triggered, there is no UL-SCH resource available for a new transmission that is used for triggering the first SR.

As an embodiment, as a response to the first buffer status report being triggered, the UL-SCH resources available for a new transmission do not meet the Logical Channel Prioritization (LCP) mapping restrictions configured for the logical channel that triggered the first BSR and are used for triggering the first SR.

As an embodiment, the first SR is triggered at the MAC sublayer.

As an embodiment, the first SR is triggered when at least the first buffer status report is triggered and is not canceled.

As an embodiment, the first SR is triggered when it is determined that at least the first buffer status report is triggered and is not canceled and there is no UL-SCH resource available for a new transmission.

As an embodiment, the first SR is triggered when it is determined that at least the first buffer status report is triggered and is not canceled and the UL-SCH resources available for a new transmission do not meet the LCP mapping restrictions configured for the logical channel that triggered the first buffer status report.

As an embodiment, the first SR is triggered when at least the first buffer status report is triggered and is not canceled, the first buffer status report is the first-type buffer status report, and there is no UL-SCH resource available for a new transmission.

As an embodiment, the first SR is triggered when at least the first buffer status report is triggered and is not canceled, the first buffer status report is the first-type buffer status report, and the UL-SCH resources available for a new transmission do not meet the LCP mapping restrictions configured for the logical channel that triggered the first buffer status report.

As an embodiment, the first SR is triggered when it is determined that at least the first buffer status report is triggered and is not canceled, the first buffer status report is the second-type buffer status report, and there is no UL-SCH resource available for a new transmission.

As an embodiment, the first SR is triggered when it is determined that at least the first buffer status report is triggered and is not canceled, the first buffer status report is the second-type buffer status report, and the UL-SCH resources available for a new transmission do not meet the LCP mapping restrictions configured for the logical channel that triggered the first buffer status report.

As an embodiment, the behavior of sending the first SR signal includes: sending the first SR signal on one PUCCH resource.

As an embodiment, the behavior of sending the first SR signal includes: sending the first SR signal on one valid PUCCH resource for SR.

As an embodiment, the behavior of sending the first SR signal includes: instruct the physical layer to send the first SR signal on one valid PUCCH resource for SR.

As an embodiment, the behavior of sending the first SR signal includes: determining to send the first SR signal.

As an embodiment, the first SR signal is transmitted on a PUCCH on one valid PUCCH resource for the first SR.

As an embodiment, the first SR signal is transmitted on a physical uplink control channel (PUCCH).

As an embodiment, the first SR signal is transmitted on a physical uplink shared channel (PUSCH).

As an embodiment, the first SR signal is used for an SR transmission for the first SR.

As an embodiment, the first SR signal is specific to the first SR.

As an embodiment, the first SR signal indicates the first SR.

As an embodiment, the first SR signal is sent at a physical layer.

As an embodiment, the first SR signal is sent on one SR transmission occasion.

As an embodiment, the first SR signal is transmitted on one PUCCH resource.

As an embodiment, the first SR signal is sent on a PUCCH resource for a valid SR transmission occasion.

As an embodiment, the first SR signal is a physical layer signal.

As an embodiment, the first SR signal occupies only 1 bit.

As an embodiment, the first SR signal occupies 2 bits.

As an embodiment, the first SR signal occupies a plurality of bits.

As an embodiment, the first SR signal is used for requesting an uplink resource used for the first buffer status report.

As an embodiment, when the first SR signal is sent, the first timer is not running.

As an embodiment, a resource used for carrying the first SR signal is preconfigured.

As an embodiment, a resource used for carrying the first SR signal is configured by an RRC message.

As an embodiment, a first counter is increased by 1 with the behavior of sending the first SR signal.

As an embodiment, when the first SR signal is sent, the first counter is equal to 0.

As an embodiment, when the first SR signal is sent, the first counter is greater than 0.

As an embodiment, when the first SR signal is sent, the first counter is less than the target integer.

As an embodiment, the phrase about with the behavior of sending the first SR signal includes: after the first SR signal is sent.

As an embodiment, the phrase about with the behavior of sending the first SR signal includes: closely following that the first SR signal is sent.

As an embodiment, the phrase about with the behavior of sending the first SR signal includes: after the physical layer is instructed to send the first SR signal.

As an embodiment, the phrase about with the behavior of sending the first SR signal includes: closely following that the physical layer is instructed to send the first SR signal.

As an embodiment, the phrase about whether to start the first timer is related to a type of the first buffer status report includes: whether to start the first timer is related to at least the type of the first buffer status report.

As an embodiment, the phrase about whether to start the first timer is related to a type of the first buffer status report includes: at least the type of the first buffer status report is used for determining whether to start the first timer.

As an embodiment, the phrase about whether to start the first timer is related to a type of the first buffer status report includes: whether to start the first timer depends on at least the type of the first buffer status report.

As an embodiment, the phrase about whether to start the first timer is related to a type of the first buffer status report includes: whether to start the first timer depends on the type of the first buffer status report.

As an embodiment, the phrase about only when the first buffer status report is the former one of a first-type buffer status report and a second-type buffer status report may be replaced with: only when the first buffer status report is not the second-type buffer status report.

As an embodiment, first signaling is received, where the first signaling indicates a first time length of a first timer; a first SR is triggered as a response to a first buffer status report being triggered; and a first SR signal is sent after the first SR is triggered, where the first timer is started with the behavior of sending the first SR signal, and whether the first timer is set to the first time length is related to a type of the first buffer status report, where the phrase about whether the first timer is set to the first time length is related to a type of the first buffer status report includes: setting the first timer to the first time length only when the first buffer status report is the former one of the first-type buffer status report and the second-type buffer status report, where a running state of the first timer is used for determining whether to send an SR signal for the first SR; and the first-type buffer status report includes a regular BSR, and the second-type buffer status report is different from the first-type buffer status report.

As an embodiment, first signaling is received, where the first signaling indicates a first time length of a first timer; a first SR is triggered as a response to a first-type buffer status report being triggered; and a first SR signal is sent after the first SR is triggered, where the first timer is started with the behavior of sending the first SR signal, and the first timer is set to the first time length; a running state of the first timer is used for determining whether to send an SR signal for the first SR; and the first-type buffer status report includes a regular BSR.

As an embodiment, first signaling is received, where the first signaling indicates a first time length of a first timer; a first SR is triggered as a response to a second-type buffer status report being triggered; and a first SR signal is sent after the first SR is triggered, where the first timer is started with the behavior of sending the first SR signal, and the first timer is not set to the first time length; a running state of the first timer is used for determining whether to send an SR signal for the first SR; and the first-type buffer status report includes a regular BSR, and the second-type buffer status report is different from the first-type buffer status report.

As a sub-embodiment of this embodiment, the first timer is set to the second time length.

As an embodiment, a first SR is triggered as a response to a first-type buffer status report being triggered; and a first SR signal is sent after the first SR is triggered, where the first timer is started with the behavior of sending the first SR signal, and the first timer is set to the first time length.

As an embodiment, a first SR is triggered as a response to a second-type buffer status report being triggered; and a first SR signal is sent after the first SR is triggered, where the first timer is started with the behavior of sending the first SR signal, and the first timer is not set to the first time length.

As a sub-embodiment of this embodiment, the first timer is set to the second time length.

As an embodiment, with the behavior of sending the first SR signal, whether to start the first timer is unrelated to a type of the first buffer status report.

As an embodiment, the first timer is started with the behavior of sending the first SR signal; the first buffer status report is the first-type buffer status report.

As an embodiment, the first timer is started with the behavior of sending the first SR signal; the first buffer status report is the second-type buffer status report.

As an embodiment, the first timer is started with the behavior of sending the first SR signal, and the first timer is set to the first time length; the first buffer status report is the first-type buffer status report.

As an embodiment, the first timer is started with the behavior of sending the first SR signal, and the first timer is not set to the first time length; the first buffer status report is the second-type buffer status report.

As an embodiment, the first timer is started with the behavior of sending the first SR signal, and the first timer is set to the second time length; the first buffer status report is the second-type buffer status report.

As an embodiment, the phrase about whether the first timer is set to the first time length is related to a type of the first buffer status report includes: whether to apply the first time length is related to at least the type of the first buffer status report.

As an embodiment, the phrase about whether the first timer is set to the first time length is related to a type of the first buffer status report includes: at least the type of the first buffer status report is used for determining whether the first timer is set to the first time length.

As an embodiment, the phrase about whether the first timer is set to the first time length is related to a type of the first buffer status report includes: whether the first timer is set to the first time length depends on at least the type of the first buffer status report.

As an embodiment, the phrase about whether the first timer is set to the first time length is related to a type of the first buffer status report includes: whether the first timer is set to the first time length depends on the type of the first buffer status report.

As an embodiment, the phrase about whether the first timer is set to the first time length is related to a type of the first buffer status report includes: whether the first timer is set to the first time length is related to the type of the first buffer status report.

As an embodiment, the first timer is started with the behavior of sending the first SR signal, and the first timer is not set to the first time length when the first buffer status report is the latter one of the first-type buffer status report and the second-type buffer status report.

As an embodiment, the first timer is started with the behavior of sending the first SR signal, and the first timer is set to the second time length when the first buffer status report is the latter one of the first-type buffer status report and the second-type buffer status report.

As an embodiment, with the behavior of sending the first SR signal, whether the first timer is started is related to whether a Listen Before Talk (LBT) failure indication is received.

As an embodiment, with the behavior of sending the first SR signal, whether the first timer is started is related to whether an LBT failure indication is received, and whether to start the first timer is related to a type of the first buffer status report.

As an embodiment, only when at least the LBT failure indication is not received, with the behavior of sending the first SR signal, whether to start the first timer is related to a type of the first buffer status report.

As an embodiment, with the behavior of sending the first SR signal, whether to start the first timer is related to a type of the first buffer status report if the LBT failure indication is not received.

As an embodiment, with the behavior of sending the first SR signal, the first timer is started only when the LBT failure indication is not received and the first buffer status report is the former one of a first-type buffer status report and a second-type buffer status report.

As an embodiment, with the behavior of sending the first SR signal, the first timer is started only when the LBT failure indication is not received and the first buffer status report is not the second-type buffer status report.

As an embodiment, the first timer is started with the behavior of sending the first SR signal, and whether the first timer is set to the first time length is related to a type of the first buffer status report, the LBT failure indication is not received.

As an embodiment, with the behavior of sending the first SR signal, the first timer is started only when the LBT failure indication is not received, and whether the first timer is set to the first time length is related to a type of the first buffer status report.

As an embodiment, with the behavior of sending the first SR signal, the first timer is started if the LBT failure indication is not received, and whether the first timer is set to the first time length is related to a type of the first buffer status report.

As an embodiment, with the behavior of sending the first SR signal, the first timer is started if the LBT failure indication is not received, and the first timer is set to the first time length only when the first buffer status report is the former one of the first-type buffer status report and the second-type buffer status report.

As an embodiment, with the behavior of sending the first SR signal, the first timer is started if the LBT failure indication is not received, and the first timer is set to the first time length only when the first buffer status report is not the second-type buffer status report.

As an embodiment, no LBT failure indication is received.

As an embodiment, no LBT failure indication for the first SR signal is received.

As an embodiment, when the first SR signal is sent or after the first SR signal is sent, no LBT failure indication is received; and the lbt-FailureRecoveryConfig is not configured.

As an embodiment, when the first SR signal is sent or after the first SR signal is sent, no LBT failure indication is received; and the lbt-FailureRecoveryConfig is configured.

As an embodiment, that no LBT failure indication is received means that no LBT failure indication is received from a lower layer.

As an embodiment, that no LBT failure indication is received means that no LBT failure indication is received from the physical layer.

As an embodiment, that no LBT failure indication is received means that The first MAC entity receives no LBT failure indication from a lower layer.

As an embodiment, that no LBT failure indication is received means that no LBT failure indication for the first SR signal is received.

As an embodiment, the phrase that a running state of the first timer is used for determining whether to send an SR signal for the first SR includes: that at least the first timer is not running is used for determining that the SR signal for the first SR is sent on one PUCCH resource.

As an embodiment, on one SR transmission occasion, if the first timer is running, the SR signal for the first SR is not sent.

As an embodiment, on one SR transmission occasion, if the first timer is running, a PUCCH resource for the one SR transmission occasion is not used for sending an SR signal.

As an embodiment, on one SR transmission occasion, if the first timer is running, a PUCCH resource for the one SR transmission occasion is not used for sending an SR signal for the first SR.

As an embodiment, that the first timer is running is used for preventing the SR signal for the first SR from being sent on the PUCCH resource available for the one SR transmission occasion.

As an embodiment, if the first timer is not running on one SR transmission occasion, the PUCCH resource for the one SR transmission occasion does not overlap with a measurement gap, and at least one condition in the first condition set is satisfied, the SR signal for the first SR is sent.

As an embodiment, if the first timer is not running on one SR transmission occasion, the PUCCH resource for the one SR transmission occasion does not overlap with a measurement gap, and at least one condition in the first condition set is satisfied, the SR signal for the first SR is sent.

As an embodiment, data packets in a data packet set have a dependency relationship.

As an embodiment, that data packets in a data packet set have a dependency relationship includes: Any two data packets in the data packet set have a dependency relationship.

As an embodiment, that data packets in a data packet set have a dependency relationship includes: any data packet in the data packet set depends on at least one data packet other than the any data packet in the data packet set.

As an embodiment, that data packets in a data packet set have a dependency relationship includes: decoding of any data packet in the data packet set relies on at least one data packet other than the any data packet in the data packet set.

As an embodiment, that data packets in a data packet set have a dependency relationship includes: a picture of any data packet in the data packet set depends on at least one data packet other than the any data packet in the data packet set.

As an embodiment, that data packets in a data packet set have a dependency relationship includes: QoS of any data packet in the data packet set depends on at least one data packet other than the any data packet in the data packet set.

As an embodiment, that data packets in a data packet set have a dependency relationship includes: All data packets in the data packet set are used for constructing a same picture.

As an embodiment, that data packets in a data packet set have a dependency relationship includes: All data packets in the data packet set belong to a same QoS flow.

As an embodiment, that data packets in a data packet set have a dependency relationship includes: There is a delay requirement for all data packets in the data packet set.

As an embodiment, that data packets in a data packet set have a dependency relationship includes: delay budgets for all data packets in the data packet set cannot exceed a threshold.

As an embodiment, a type of any data packet in a data packet set is a data packet type in the first candidate data packet type set.

As a sub-embodiment of this embodiment, one data packet type in the first candidate data packet type set is a Packet Data Convergence Protocol (PDCP) service data unit (SDU).

As a sub-embodiment of this embodiment, one data packet type in the first candidate data packet type set is a PDCP data PDU.

As a sub-embodiment of this embodiment, one data packet type in the first candidate data packet type set is a PDCP control PDU.

As a sub-embodiment of this embodiment, one data packet type in the first candidate data packet type set is a to-be-retransmitted PDCP SDU for an acknowledged mode (AM) Data Radio Bearer (DRB).

As a sub-embodiment of this embodiment, one data packet type in the first candidate data packet type set is a to-be-retransmitted PDCP data PDU for an AM DRB.

As a sub-embodiment of this embodiment, one data packet type in the first candidate data packet type set is a Radio Link Control (RLC) SDU.

As a sub-embodiment of this embodiment, one data packet type in the first candidate data packet type set is an RLC SDU segment.

As a sub-embodiment of this embodiment, one data packet type in the first candidate data packet type set is a to-be-initially-transmitted RLC data PDU.

As a sub-embodiment of this embodiment, one data packet type in the first candidate data packet type set is a to-be-retransmitted RLC data PDU for an RLC AM.

As a sub-embodiment of this embodiment, a data packet type in the first candidate data packet type set includes at least one of a PDCP SDU, a PDCP data PDU, a PDCP control PDU, a to-be-retransmitted PDCP SDU for an AM DRB, a to-be-retransmitted PDCP data PDU for an AM DRB, an RLC SDU, a RLC SDU segment, a to-be-initially-transmitted RLC data PDU, or a to-be-retransmitted RLC data PDU for an RLC AM.

As an embodiment, the first MAC entity of the first node triggers the first SR.

As an embodiment, the first MAC entity of the first node triggers the first buffer status report.

As an embodiment, the first MAC entity of the first node starts a first timer.

As an embodiment, the first MAC entity is associated with an MCG of the first node.

As an embodiment, the first MAC entity is associated with an SCG of the first node.

As an embodiment, the first MAC entity is associated with a sidelink of the first node.

As an embodiment, the triggering is triggering at the MAC sublayer.

As an embodiment, the triggering is triggering by the first MAC entity.

As an embodiment, the triggering includes trigger.

As an embodiment, the triggering does not include sending.

As an embodiment, the first timer is first started and then the value of the first timer is set; or the first timer is started.

As an embodiment, the value of the first timer is set while starting the first timer; or the first timer is started.

### Embodiment 2

Embodiment 2 illustrates a schematic diagram of a network architecture according to an embodiment of this application, as shown in FIG. 2. FIG. 2 illustrates a network architecture 200 of 5G New Radio (NR)/Long-Term Evolution (LTE)/Long-Term Evolution Advanced (LTE-A) systems. The 5G NR/LTE/LTE-A network architecture 200 may be referred to as a 5G System (5GS)/Evolved Packet System (EPS) 200 or another suitable term. The 5GS/EPS 200 includes at least one of user equipment (UE) 201, a radio access network (RAN) 202, a 5G Core Network (5GC)/Evolved Packet Core (EPC) 210, a Home Subscriber Server (HSS)/Unified Data Management (UDM) 220, and an Internet service 230. The 5GS/EPS may be interconnected to another access network, but for simplicity, these entities/interfaces are not shown. As shown in the figure, the 5GS/EPS provides a packet switching service. However, a person skilled in the art will easily understand that various concepts presented throughout this application may be extended to a network that provides a circuit switching service or another cellular network. The RAN includes a node 203 and another node 204. The node 203 provides termination of user and control plane protocols towards the UE 201. The node 203 may be connected to the another node 204 by using an Xn interface (for example, backhaul)/X2 interface. The node 203 may alternatively be referred to as a base station, a base transceiver station, a radio base station, a radio transceiver, a transceiver function, a basic service set (BSS), an extended service set (ESS), a Transmission reception point (TRP), or another suitable term. The node 203 provides the UE 201 with an access point to the 5GC/EPC 210. An example of the UE 201 includes a cellular phone, a smartphone, a session initiation protocol (SIP) phone, a laptop computer, a personal digital assistant (PDA), a satellite radio, non-terrestrial base station communication, satellite mobile communication, a global positioning system, a multimedia apparatus, a video apparatus, a digital audio player (for example, an MP3 player), a camera, a game console, an unmanned aerial vehicle, an aircraft, a narrowband Internet of Things device, a machine type communication device, a land vehicle, an automobile, a wearable device, or any other apparatuses having similar functions. A person skilled in the art may alternatively refer to the UE 201 as a mobile station, a subscriber station, a mobile unit, a subscriber unit, a wireless unit, a remote unit, a mobile apparatus, a wireless apparatus, a wireless communication apparatus, a remote apparatus, a mobile subscriber station, an access terminal, a mobile terminal, a wireless terminal, a remote terminal, a handset, a user agent, a mobile client, a client, or another suitable term. The node 203 is connected to the 5GC/EPC210 by using an S1/NG interface. The 5GC/EPC210 includes a Mobility Management Entity (MME)/Authentication Management Field (AMF)/Session Management Function (SMF) 211, another MME/AMF/SMF214, a Service Gateway (S-GW)/a User Plane Function (UPF) 212, and a Packet Data Network Gateway (P-GW)/UPF213. The MME/AMF/SMF211 is a control node that processes signaling between the UE201 and the 5GC/EPC210. Generally, the MME/AMF/SMF211 provides bearer and connection management. All user Internet Protocol (IP) packets are transmitted by using the S-GW/UPF212, and the S-GW/UPF212 is connected to the P-GW/UPF213. The P-GW provides UE IP address assignment and other functions. The P-GW/UPF213 is connected to the Internet service 230. The Internet service 230 includes IP services corresponding to operators, and may specifically include Internet, Intranet, an IP Multimedia Subsystem (IMS), and packet switching streaming services.

As an embodiment, the UE201 corresponds to the first node in this application.

As an embodiment, the UE201 is user equipment (UE).

As an embodiment, the UE201 is a base station (BS) device.

As an embodiment, the UE201 is a relay device.

As an embodiment, the node 203 corresponds to the second node in this application.

As an embodiment, the node 203 is a base station device.

As an embodiment, the node 203 is user equipment.

As an embodiment, the node 203 is a relay device.

As an embodiment, the node 203 is a gateway.

As an embodiment, the user equipment supports transmission in a Non-Terrestrial Network (NTN).

As an embodiment, the user equipment supports transmission in a Terrestrial Network.

As an embodiment, the user equipment supports transmission in a network with a large delay difference.

As an embodiment, the user equipment supports Dual Connection (DC) transmission.

As an embodiment, the user equipment includes a handheld terminal.

As an embodiment, the user equipment includes a wearable device.

As an embodiment, the user equipment includes an aircraft.

As an embodiment, the user equipment includes an in-vehicle terminal.

As an embodiment, the user equipment includes a watercraft.

As an embodiment, the user equipment includes an Internet of Things terminal.

As an embodiment, the user equipment includes an industrial Internet of Things terminal.

As an embodiment, the user equipment includes a device supporting low-delay and high-reliability transmission.

As an embodiment, the user equipment includes a test device.

As an embodiment, the user equipment includes a signaling tester.

As an embodiment, the base station device includes a Base Transceiver Station (BTS).

As an embodiment, the base station device includes a NodeB (NB).

As an embodiment, the base station device includes a gNB.

As an embodiment, the base station device includes an eNB.

As an embodiment, the base station device includes an ng-eNB.

As an embodiment, the base station device includes an en-gNB.

As an embodiment, the base station device supports transmission in a non-terrestrial network.

As an embodiment, the base station device supports transmission in a network with a large delay difference.

As an embodiment, the base station device supports transmission in a terrestrial network.

As an embodiment, the base station device includes a Marco Cellular base station.

As an embodiment, the base station device includes a Micro Cell base station.

As an embodiment, the base station device includes a Pico Cell base station.

As an embodiment, the base station device includes a Femtocell.

As an embodiment, the base station device includes a base station device supporting a large delay difference.

As an embodiment, the base station device includes a flight platform device.

As an embodiment, the base station device includes a satellite device.

As an embodiment, the base station device includes a Transmission reception point (TRP).

As an embodiment, the base station device includes a Centralized Unit (CU).

As an embodiment, the base station device includes a Distributed Unit (DU).

As an embodiment, the base station device includes a test device.

As an embodiment, the base station device includes a signaling tester.

As an embodiment, the base station device includes an Integrated Access and Backhaul (IAB)-node.

As an embodiment, the base station device includes an IAB-donor.

As an embodiment, the base station device includes an IAB-donor-CU.

As an embodiment, the base station device includes an IAB-donor-DU.

As an embodiment, the base station device includes an IAB-DU.

As an embodiment, the base station device includes an IAB-MT.

As an embodiment, the relay device includes a relay.

As an embodiment, the relay device includes an L3 relay.

As an embodiment, the relay device includes an L2 relay.

As an embodiment, the relay device includes a router.

As an embodiment, the relay device includes a switch.

As an embodiment, the relay device includes user equipment.

As an embodiment, the relay device includes a base station device.

### Embodiment 3

Embodiment 3 illustrates a schematic diagram of an embodiment of a wireless protocol architecture of a user plane and a control plane according to this application, as shown in FIG. 3. FIG. 3 is a schematic diagram of an embodiment of a radio protocol architecture for a user plane 350 and a control plane 300. In FIG. 3, a radio protocol architecture for the control plane 300 is illustrated by using three layers, which are a layer 1, a layer 2 and a layer 3, respectively. The layer 1 (L1 layer) is the lowest layer and implements signal processing functions of various physical layers (PHYs). The L1 layer is referred to as a PHY301 herein. The L2 layer 305 is above the PHY301, and includes a Media Access Control (MAC) sublayer 302, a Radio Link Control (RLC) sublayer 303, and a Packet Data Convergence Protocol (PDCP) sublayer 304. The PDCP sublayer 304 provides multiplexing between different radio bearers and logical channels. The PDCP sublayer 304 further provides security by encrypting a data packet and provides support for handover. The RLC sublayer 303 provides segmentation and reassembling of an upper-layer data packet, retransmission of a lost data packet, and reordering of a data packet so as to compensate for disordered receiving caused by a hybrid automatic repeat request (HARQ). The MAC sublayer 302 provides multiplexing between a logical channel and a transport channel. The MAC sublayer 302 is further responsible for allocating various radio resources (for example, resource blocks) in a cell. The MAC sublayer 302 is further responsible for a HARQ operation. A Radio Resource Control (RRC) sublayer 306 in the layer 3 (L3 layer) in the control plane 300 is responsible for obtaining a radio resource (that is, a radio bearer) and configuring a lower layer by using RRC signaling. A radio protocol architecture of the user plane 350 includes a layer 1 (L1 layer) and a layer 2 (L2 layer). In the user plane 350, for a PHY 351, a PDCP sublayer 354 in an L2 layer 355, an RLC sublayer 353 in the L2 layer 355, and a MAC sublayer 352 in the L2 layer 355, a radio protocol architecture is substantially the same as that for the corresponding layers and sublayers in the control plane 300. However, the PDCP sublayer 354 further provides header compression for an upper-layer data packet to reduce radio transmission overhead. The L2 layer 355 in the user plane 350 further includes a Service Data Adaptation Protocol (SDAP) sublayer 356. The SDAP sublayer 356 is responsible for mapping between a Quality of Service (QoS) flow and a Data Radio Bearer (DRB), to support diversity of services.

As an embodiment, the wireless protocol architecture in FIG. 3 is applicable to the first node in this application.

As an embodiment, the wireless protocol architecture in FIG. 3 is applicable to the second node in this application.

As an embodiment, the first SR in this application is triggered at the MAC302 or the MAC352.

As an embodiment, the first buffer status report in this application is triggered at the MAC302 or the MAC352.

As an embodiment, the first signaling in this application is generated at the RRC306.

As an embodiment, the first signaling in this application is generated at the MAC302 or the MAC352.

As an embodiment, the first signaling in this application is generated at the PHY301 or the PHY351.

As an embodiment, the second signaling in this application is generated at the RRC306.

As an embodiment, the second signaling in this application is generated at the MAC302 or the MAC352.

As an embodiment, the second signaling in this application is generated at the PHY301 or the PHY351.

As an embodiment, the first SR signal in this application is generated at the PHY301 or the PHY351.

### Embodiment 4

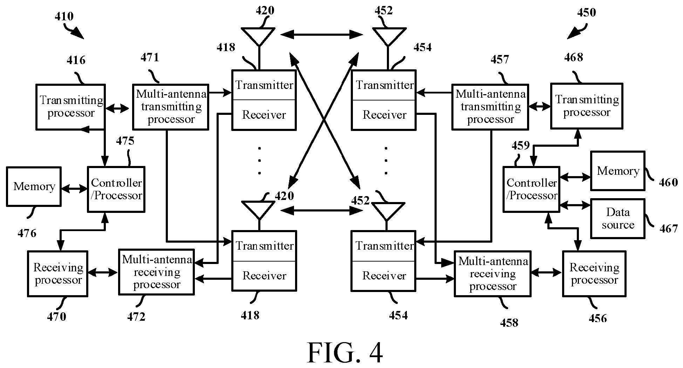

Embodiment 4 illustrates a schematic diagram of a first communication device and a second communication device according to this application, as shown in FIG. 4. FIG. 4 is a block diagram of a first communication device 450 and a second communication device 410 communicating with each other in an access network.

The first communication device 450 includes a controller/processor 459, a memory 460, a data source 467, a transmitting processor 468, a receiving processor 456, a multi-antenna transmitting processor 457, a multi-antenna receiving processor 458, a transmitter/receiver 454, and an antenna 452.

The second communication device 410 includes a controller/processor 475, a memory 476, a receiving processor 470, a transmitting processor 416, a multi-antenna receiving processor 472, a multi-antenna transmitting processor 471, a transmitter/receiver 418, and an antenna 420.

During transmission from the second communication device 410 to the first communication device 450, at the second communication device 410, an upper-layer data packet from the core network is provided to the controller/processor 475. The controller/processor 475 implements the functions of the L2 layer. During transmission from the second communication device 410 to the first communication device 450, the controller/processor 475 provides header compression, encryption, packet segmentation and reordering, multiplexing between a logical channel and a transport channel, and radio resource allocation of the first communication device 450 based on various priority metrics. The controller/processor 475 is further responsible for retransmission of a lost packet, and signaling to the first communication device 450. The transmitting processor 416 and the multi-antenna transmitting processor 471 implement various signal processing functions for the L1 layer (that is, the physical layer). The transmitting processor 416 implements coding and interleaving to facilitate forward error correction (FEC) at the second communication device 410 and signal constellation mapping based on various modulation schemes (for example, binary phase shift keying (BPSK), quadrature phase shift keying (QPSK), M-phase shift keying (M-PSK), and M-quadrature amplitude modulation (M-QAM)). The multi-antenna transmitting processor 471 performs digital space precoding, including codebook-based precoding and non-codebook-based precoding, and beamforming processing on encoded and modulated symbols to generate one or more spatial flows. The transmitting processor 416 then maps each spatial flow to a subcarrier, multiplexes a modulated symbol with a reference signal (that is, pilot frequency) in a time domain and/or a frequency domain, and then uses inverse fast Fourier transform (IFFT) to generate a physical channel carrying a time-domain multi-carrier symbol flow. Subsequently, the multi-antenna transmitting processor 471 performs a transmission analog precoding/beamforming operation on the time-domain multi-carrier symbol flow. Each transmitter 418 converts a baseband multi-carrier symbol flow provided by the multi-antenna transmitting processor 471 into a radio-frequency flow, which is later provided to different antennas 420.

During transmission from the second communication device 410 to the first communication device 450, at the first communication device 450, each receiver 454 receives a signal by using a corresponding antenna 452 thereof. Each receiver 454 recovers information modulated onto a radio-frequency carrier, and converts the radio-frequency flow into a baseband multi-carrier symbol flow which is provided to the receiving processor 456. The receiving processor 456 and the multi-antenna receiving processor 458 implement various signal processing functions of the L1 layer. The multi-antenna receiving processor 458 performs a reception analog precoding/beamforming operation on the baseband multi-carrier symbol flow provided by the receiver 454. The receiving processor 456 converts, by using fast Fourier transform (FFT), the baseband multi-carrier symbol flow, on which the reception analog precoding/beamforming operation is performed, from the time domain to the frequency domain. In the frequency domain, a physical layer data signal and a reference signal are demultiplexed by the receiving processor 456, where the reference signal is used for channel estimation, and after multi-antenna detection in the multi-antenna receiving processor 458, the data signal restores any spatial flow using the first communication device 450 as a destination. A symbol in each spatial flow is demodulated and recovered in the receiving processor 456, and a soft decision is generated. Subsequently, the receiving processor 456 decodes and deinterleaves the soft decision to recover the upper-layer data and the control signal that are transmitted by the second communication device 410 on the physical channel. Then, the upper-layer data and the control signal are provided to the controller/processor 459. The controller/processor 459 implements the functions of the L2 layer. The controller/processor 459 may be associated with a memory 460 that stores program code and data. The memory 460 may be referred to as a computer-readable medium. During transmission from the second communication device 410 to the second communication device 450, the controller/processor 459 provides demultiplexing between a transport channel and a logical channel, packet reassembling, decryption, header decompression, and control signal processing to recover the upper-layer data packet from the core network. The upper-layer data packet is later provided to all protocol layers above the L2 layer. Various control signals may alternatively be provided to L3 for processing by L3.

During transmission from the first communication device 450 to the second communication device 410, at the first communication device 450, the upper-layer data packet is provided to the controller/processor 459 by using a data source 467. The data source 467 represents all protocol layers above the L2 layer. Similar to a transmitting function at the second communication device 410 described in the transmission from the second communication device 410 to the first communication device 450, the controller/processor 459 implements header compression and encryption, packet segmentation and reordering, and multiplexing between a logical channel and a transport channel based on radio resource allocation, and implements an L2 layer function for the user plane and the control plane. The controller/processor 459 is further responsible for retransmission of a lost packet, and signaling to the second communication device 410. The transmitting processor 468 performs modulation mapping and channel coding. The multi-antenna transmitting processor 457 performs digital multi-antenna space precoding, including codebook-based precoding and non-codebook-based precoding, and beamforming. Subsequently, the transmitting processor 468 modulates generated spatial flows into a multi-carrier/single-carrier symbol flow which is subjected to an analog precoding/beamforming operation in the multi-antenna transmitting processor 457 and then provided to different antennas 452 by using the transmitter 454. Each transmitter 454 first converts a baseband symbol flow provided by the multi-antenna transmitting processor 457 into a radio-frequency symbol flow which is then provided to the antenna 452.

During transmission from the first communication device 450 to the second communication device 410, the function at the second communication device 410 is similar to the receiving function at the first communication device 450 described during transmission from the second communication device 410 to the first communication device 450. Each receiver 418 receives a radio-frequency signal by using a corresponding antenna 420 thereof, converts the received radio-frequency signal into a baseband signal, and provides the baseband signal to the multi-antenna receiving processor 472 and the receiving processor 470. The receiving processor 470 and the multi-antenna receiving processor 472 jointly implement the functions of the L1 layer. The controller/processor 475 implements the functions of the L2 layer. The controller/processor 475 may be associated with a memory 476 that stores program code and data. The memory 476 may be referred to as a computer-readable medium. During transmission from the first communication device 450 to the second communication device 410, the controller/processor 475 provides demultiplexing between a transport channel and a logical channel, packet reassembling, decryption, header decompression, and control signal processing to recover the upper-layer data packet from the UE450. The upper-layer data packet from the controller/processor 475 may be provided to the core network.

As an embodiment, the first communication device 450 includes: at least one processor and at least one memory, where the at least one memory includes computer program code; and the at least one memory and the computer program code are configured to be used with the at least one processor, and the first communication device 450 performs at least: receiving first signaling, where the first signaling indicates a first time length of a first timer; triggering a first SR as a response to a first buffer status report being triggered; and sending a first SR signal after the first SR is triggered, where with the behavior of sending the first SR signal, whether to start the first timer is related to a type of the first buffer status report; where the behavior about whether to start the first timer is related to a type of the first buffer status report includes: starting the first timer only when the first buffer status report is the former one of a first-type buffer status report and a second-type buffer status report; and a running state of the first timer is used for determining whether to send an SR signal for the first SR; and the first-type buffer status report includes a regular BSR, and the second-type buffer status report is different from the first-type buffer status report.

As an embodiment, the first communication device 450 includes: a memory storing a computer-readable instruction program. The computer-readable instruction program generates actions when being executed by at least one processor. The actions include: receiving first signaling, where the first signaling indicates a first time length of a first timer; triggering a first SR as a response to a first buffer status report being triggered; and sending a first SR signal after the first SR is triggered, where with the behavior of sending the first SR signal, whether to start the first timer is related to a type of the first buffer status report; where the behavior about whether to start the first timer is related to a type of the first buffer status report includes: starting the first timer only when the first buffer status report is the former one of a first-type buffer status report and a second-type buffer status report; and a running state of the first timer is used for determining whether to send an SR signal for the first SR; and the first-type buffer status report includes a regular BSR, and the second-type buffer status report is different from the first-type buffer status report.

As an embodiment, the first communication device 450 includes: at least one processor and at least one memory, where the at least one memory includes computer program code; and the at least one memory and the computer program code are configured to be used with the at least one processor, and the first communication device 450 performs at least: receiving first signaling, where the first signaling indicates a first time length of a first timer; triggering a first SR as a response to a first buffer status report being triggered; sending a first SR signal after the first SR is triggered, where the first timer is started with the behavior of sending the first SR signal, and whether the first timer is set to the first time length is related to a type of the first buffer status report, where the phrase about whether the first timer is set to the first time length is related to a type of the first buffer status report includes: setting the first timer to the first time length only when the first buffer status report is the former one of the first-type buffer status report and the second-type buffer status report, where a running state of the first timer is used for determining whether to send an SR signal for the first SR; and the first-type buffer status report includes a regular BSR, and the second-type buffer status report is different from the first-type buffer status report.

As an embodiment, the first communication device 450 includes: a memory storing a computer-readable instruction program. The computer-readable instruction program generates actions when being executed by at least one processor. The actions include: receiving first signaling, where the first signaling indicates a first time length of a first timer; triggering a first SR as a response to a first buffer status report being triggered; sending a first SR signal after the first SR is triggered, where the first timer is started with the behavior of sending the first SR signal, and whether the first timer is set to the first time length is related to a type of the first buffer status report, where the phrase about whether the first timer is set to the first time length is related to a type of the first buffer status report includes: setting the first timer to the first time length only when the first buffer status report is the former one of the first-type buffer status report and the second-type buffer status report, where a running state of the first timer is used for determining whether to send an SR signal for the first SR; and the first-type buffer status report includes a regular BSR, and the second-type buffer status report is different from the first-type buffer status report.

As an embodiment, the second communication device 410 includes: at least one processor and at least one memory, where the at least one memory includes computer program code; and the at least one memory and the computer program code are configured to be used with the at least one processor. The second communication device 410 performs at least: sending first signaling, where the first signaling indicates a first time length of a first timer; and a second receiver, configured to receive a first SR signal, where a first SR is triggered as a response to a first buffer status report being triggered; the first SR signal is sent after the first SR is triggered; a running state of the first timer is used for determining whether to send an SR signal for the first SR; and the first-type buffer status report includes a regular BSR, and the second-type buffer status report is different from the first-type buffer status report.

As an embodiment, as the first SR signal is sent, whether the first timer is started is related to a type of the first buffer status report; the phrase about whether the first timer is started is related to a type of the first buffer status report includes: starting the first timer only when the first buffer status report is the former one of a first-type buffer status report and a second-type buffer status report.

As an embodiment, the first timer is started as the first SR signal is sent, and whether the first timer is set to the first time length is related to a type of the first buffer status report; the phrase about whether the first timer is set to the first time length is related to a type of the first buffer status report includes: setting the first timer to the first time length only when the first buffer status report is the former one of the first-type buffer status report and the second-type buffer status report.

As an embodiment, the second communication device 410 includes: a memory storing a computer-readable instruction program. The computer-readable instruction program generates actions when being executed by at least one processor. The actions include: sending first signaling, where the first signaling indicates a first time length of a first timer; and a second receiver, configured to receive a first SR signal, where a first SR is triggered as a response to a first buffer status report being triggered; the first SR signal is sent after the first SR is triggered; a running state of the first timer is used for determining whether to send an SR signal for the first SR; and the first-type buffer status report includes a regular BSR, and the second-type buffer status report is different from the first-type buffer status report.

As an embodiment, as the first SR signal is sent, whether the first timer is started is related to a type of the first buffer status report; the phrase about whether the first timer is started is related to a type of the first buffer status report includes: starting the first timer only when the first buffer status report is the former one of a first-type buffer status report and a second-type buffer status report.

As an embodiment, the first timer is started as the first SR signal is sent, and whether the first timer is set to the first time length is related to a type of the first buffer status report; the phrase about whether the first timer is set to the first time length is related to a type of the first buffer status report includes: setting the first timer to the first time length only when the first buffer status report is the former one of the first-type buffer status report and the second-type buffer status report.

As an embodiment, at least one of the antenna 452, the receiver 454, the receiving processor 456, and the controller/processor 459 is configured to receive the first signaling.

As an embodiment, at least one of the antenna 420, the transmitter 418, the transmitting processor 416, and the controller/processor 475 is configured to send the first signaling.

As an embodiment, at least one of the antenna 452, the receiver 454, the receiving processor 456, and the controller/processor 459 is configured to receive the second signaling.

As an embodiment, at least one of the antenna 420, the transmitter 418, the transmitting processor 416, and the controller/processor 475 is configured to send the second signaling.

As an embodiment, at least one of the antenna 452, the transmitter 454, the transmitting processor 468, and the controller/processor 459 is configured to send the first SR signal.

As an embodiment, at least one of the antenna 420, the receiver 418, the receiving processor 470, and the controller/processor 475 is configured to receive the first SR signal.

As an embodiment, at least one of the antenna 452, the transmitter 454, the transmitting processor 468, and the controller/processor 459 is configured to trigger the first SR.

As an embodiment, at least one of the antenna 452, the transmitter 454, the transmitting processor 468, and the controller/processor 459 is configured to trigger the first buffer status report.

As an embodiment, the first communication device 450 corresponds to the first node in this application.

As an embodiment, the second communication device 410 corresponds to the second node in this application.

As an embodiment, the first communication device 450 is user equipment.

As an embodiment, the first communication device 450 is user equipment supporting a large delay difference.

As an embodiment, the first communication device 450 is user equipment supporting an NTN.

As an embodiment, the first communication device 450 is an aircraft device.

As an embodiment, the first communication device 450 has a positioning capability.

As an embodiment, the first communication device 450 has no positioning capability.

As an embodiment, the first communication device 450 is user equipment supporting an TN.

As an embodiment, the second communication device 410 is a base station device (gNB/eNB/ng-eNB).

As an embodiment, the second communication device 410 is a base station device supporting a large delay difference.

As an embodiment, the second communication device 410 is a base station device supporting an NTN.

As an embodiment, the second communication device 410 is a satellite device.

As an embodiment, the second communication device 410 is a flight platform device.

As an embodiment, the second communication device 410 is a base station device supporting an TN.

### Embodiment 5

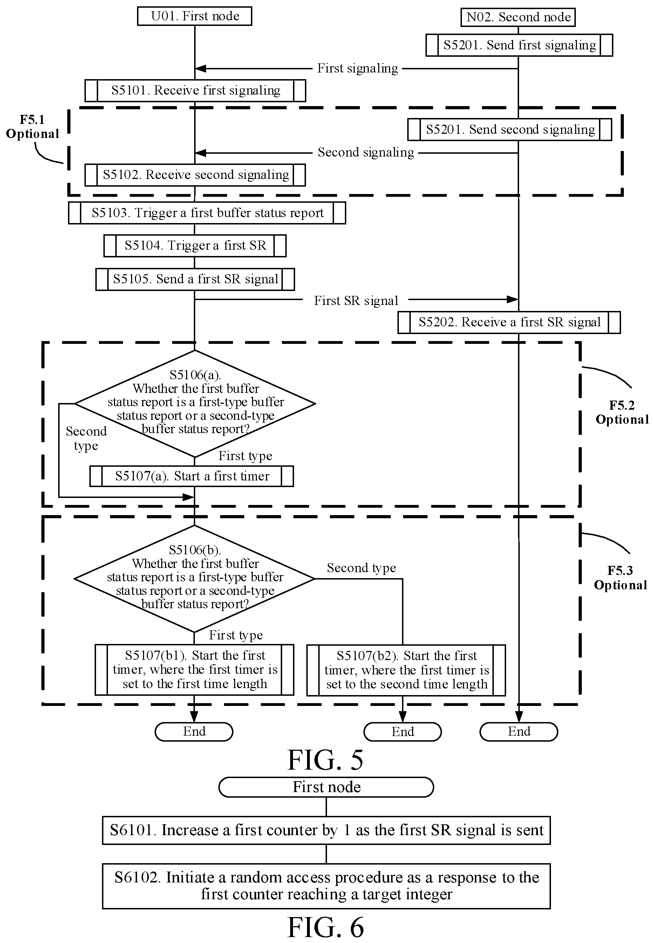

Embodiment 5 illustrates a flowchart of radio signal transmission according to an embodiment of this application, as shown in FIG. 5. It should be particularly noted that the sequence in this example does not limit a signal transmission sequence and an implementation sequence in this application.

A **first node U01** receives, in step S5101, first signaling, where the first signaling indicates a first time length of a first timer; receives, in step S5102, second signaling, where the second signaling indicates a second time length of the first timer; triggers, in step S5103, a first buffer status report; triggers, in step S5104, a first SR as a response to a first buffer status report being triggered; sends, in step S5105, a first SR signal after the first SR is triggered; determines, in step S5106(a) with the behavior of sending the first SR signal, whether the first buffer status report is a first-type buffer status report or a second-type buffer status report, where step S5107(a) is performed only when the first buffer status report is the former one of a first-type buffer status report and a second-type buffer status report; starts, in step S5107(a), the first timer; determines, in step S5106(b) with the behavior of sending the first SR signal, whether the first buffer status report is the first-type buffer status report or the second-type buffer status report, where step S5107(b1) is performed when the first buffer status report is the former one of a first-type buffer status report and a second-type buffer status report, or step S5107(b2) is performed when the first buffer status report is the latter one of a first-type buffer status report and a second-type buffer status report; starts, in step S5107(b1), the first timer, where the first timer is set to the first time length; and starts, in step S5107(b2), the first timer, where the first timer is set to the second time length.

A **second node N02** sends, in step S5201, the first signaling; and receives, in step S5202, the first SR signal.

In Embodiment 5, a running state of the first timer is used for determining whether to send an SR signal for the first SR; and the first-type buffer status report includes a regular BSR, and the second-type buffer status report is different from the first-type buffer status report.

As an embodiment, whether to start the first timer is related to the type of the first buffer status report; the behavior about whether to start the first timer is related to a type of the first buffer status report includes: starting the first timer only when the first buffer status report is the former one of a first-type buffer status report and a second-type buffer status report; and skipping starting the first timer when the first buffer status report is the latter one of the first-type buffer status report and the second-type buffer status report.

As an embodiment, whether the first timer is set to the first time length is related to the type of the first buffer status report; the phrase about whether the first timer is set to the first time length is related to a type of the first buffer status report includes: setting the first timer to the first time length only when the first buffer status report is the former one of the first-type buffer status report and the second-type buffer status report, where setting the first timer to the second time length when the first buffer status report is the latter one of the first-type buffer status report and the second-type buffer status report.

As an embodiment, the first node U01 is user equipment.

As an embodiment, the first node U01 is a base station device.

As an embodiment, the first node U01 is a relay device.

As an embodiment, the second node N02 is a base station device.

As an embodiment, the second node N02 is user equipment.

As an embodiment, the second node N02 is a relay device.

As an embodiment, the first node U01 is user equipment, and the second node N02 is a base station device.

As an embodiment, the first node U01 is user equipment, and the second node N02 is a relay device.

As an embodiment, the first node U01 is user equipment, and the second node N02 is user equipment.

As an embodiment, the first node U01 is a base station device, and the second node N02 is a base station device.

As an embodiment, the first node U01 is a relay device, and the second node N02 is a base station device.

As an embodiment, the first node U01 and the second node N02 are connected to each other by using a uu interface.

As an embodiment, the first node U01 and the second node N02 are connected to each other by using an Xn interface.

As an embodiment, the first node U01 and the second node N02 are connected to each other by using an X2 interface.

As an embodiment, the first node U01 and the second node N02 are connected to each other by using an PC5 interface.

As an embodiment, the first node U01 and the second node N02 are connected to each other by using an air interface.

As an embodiment, with the behavior of sending the first SR signal, the first counter is increased by 1 and the first timer is started when the first buffer status report is the former one of the first-type buffer status report and the second-type buffer status report; or the first counter is increased by 1 and the first timer is not started when the first buffer status report is the latter one of the first-type buffer status report and the second-type buffer status report.

As an embodiment, with the behavior of sending the first SR signal, the first counter is increased by 1, the first timer is started, and the first timer is set to the first time length when the first buffer status report is the former one of the first-type buffer status report and the second-type buffer status report; or the first counter is increased by 1, the first timer is started, and the first timer is set to the second time length when the first buffer status report is the latter one of the first-type buffer status report and the second-type buffer status report.

As an embodiment, with the behavior of sending the first SR signal, the first counter is increased by 1, the first timer is started, and the first timer is set to the first time length when the first buffer status report is the former one of the first-type buffer status report and the second-type buffer status report; or the first counter is increased by 1, the first timer is started, and the first timer is set to the second time length when the first buffer status report is the latter one of the first-type buffer status report and the second-type buffer status report.

As an embodiment, the second signaling indicates a first offset, and the first offset is used for determining the second time length of the first timer.

As an embodiment, the second time length is related to the first time length and the first offset.

As an embodiment, the second time length depends on the first time length and the first offset.

As an embodiment, the second time length is equal to a sum of the first time length and the first offset.

As an embodiment, the second time length is equal to a difference between the first time length and the first offset.

As an embodiment, the second time length is equal to a product of the first time length and the first offset.

As an embodiment, the second time length is equal to a quotient of the first time length and the first offset.

As an embodiment, the first offset is a scaling factor.

As an embodiment, the first offset is an integer.

As an embodiment, the first offset is a positive number.

As an embodiment, the second signaling explicitly indicates the second time length of the first timer.

As an embodiment, the second signaling implicitly indicates the second time length of the first timer.

As an embodiment, the second signaling is used for configuring the second time length of the first timer.

As an embodiment, the second signaling is used for determining the second time length of the first timer.

As an embodiment, the second signaling and the first signaling are configured for the first MAC entity.

As an embodiment, the second signaling and the first signaling are configured for a cell group to which the first MAC entity belongs.

As an embodiment, the second signaling is the first signaling.

As an embodiment, the first signaling indicates the first time length, and the second signaling indicates the second time length.

As an embodiment, the first signaling indicates the first time length and the second time length.

As an embodiment, the second signaling and the first signaling belong to a same RRC message.

As an embodiment, the second signaling and the first signaling belong to two different RRC messages.

As an embodiment, the second signaling and the first signaling belong to a same SchedulingRequestConfig IE.

As an embodiment, the second signaling and the first signaling belong to a same schedulingRequestToAddModList field.

As an embodiment, the second signaling and the first signaling belong to a same SchedulingRequestToAddMod field.

As an embodiment, the second signaling includes one MAC CE, and the one MAC CE indicates the second time length of the first timer.

As an embodiment, the second signaling includes at least one RRC message.

As an embodiment, the second signaling includes at least one RRC IE in one RRC message.

As an embodiment, the second signaling includes at least one RRC field in one RRC message.

As an embodiment, the second signaling includes a second RRC field, and the second RRC field indicates the second time length of the first timer.

As a sub-embodiment of this embodiment, the second RRC field is an RRC field whose name includes sr-ProhibitTimer.

As a sub-embodiment of this embodiment, the second RRC field is used for configuring an sr-ProhibitTimer field outside the first time length.

As a sub-embodiment of this embodiment, the second RRC field is an sr-ProhibitTimer field.

As a sub-embodiment of this embodiment, the second RRC field is not an sr-ProhibitTimer field.

As a sub-embodiment of this embodiment, the name of the second RRC field includes at least one of sr, Prohibit, Timer, -r18, -v1800, -v1801, or -v1802.

As a sub-embodiment of this embodiment, the name of the second RRC field includes sr-ProhibitTimer.

As a sub-embodiment of this embodiment, the second RRC field is an sr-ProhibitTimer-r18 field.

As a sub-embodiment of this embodiment, the second RRC field is an sr-ProhibitTimer-v1800 field.

As a sub-embodiment of this embodiment, the second RRC field is an sr-ProhibitTimer-v1801 field.

As a sub-embodiment of this embodiment, a candidate value of the second RRC field includes 0.25 ms.

As a sub-embodiment of this embodiment, a candidate value of the second RRC field includes 0.5 ms.

As a sub-embodiment of this embodiment, a candidate value of the second RRC field is less than 1 ms.

As a sub-embodiment of this embodiment, any candidate value of the second RRC field is 1 ms, 2 ms, 4 ms, 8 ms, 16 ms, 32 ms, 64 ms, or 128 ms.

As an embodiment, a same piece of schedulingRequestId is configured for the second time length and the first time length.

As an embodiment, two different pieces of schedulingRequestId are configured for the second time length and the first time length.

As an embodiment, the first RRC field is used for configuring the first time length, and the second RRC field is used for configuring the second time length.

As an embodiment, the first RRC field and the second RRC field belong to a same SchedulingRequestToAddMod field.

As an embodiment, the first RRC field and the second RRC field belong to two different SchedulingRequestToAddMod fields.

As an embodiment, the first time length is used for an SR triggered by the first-type buffer status report, and the second time length is used for an SR triggered by the second-type buffer status report.

As an embodiment, the second time length and the first time length are configured for an SR configuration indicated by a same SR configuration identifier (schedulingRequestId).

As an embodiment, the second time length and the first time length are respectively configured for two SR configurations indicated by different SR configuration identifiers (schedulingRequestId).

As an embodiment, the dashed box F5.1 is optional.

As an embodiment, the dashed box F5.1 exists.

As an embodiment, the dashed box F5.1 does not exist.

As an embodiment, the dashed box F5.2 is optional.

As an embodiment, the dashed box F5.2 exists.

As an embodiment, the dashed box F5.2 does not exist.

As an embodiment, the dashed box F5.3 is optional.

As an embodiment, the dashed box F5.3 exists.

As an embodiment, the dashed box F5.3 does not exist.

As an embodiment, the dashed box F5.1 exists only when the dashed box F5.3 exists.

As an embodiment, only one of the dashed box F5.3 and the dashed box F5.2 exists.

As an embodiment, the dashed box F5.3 exists, and the dashed box F5.2 does not exist.

As an embodiment, the dashed box F5.3 does not exist, and the dashed box F5.2 exists.

### Embodiment 6

Embodiment 6 illustrates a flowchart of a first counter according to an embodiment of this application, as shown in FIG. 6.

A **first node U01** increases, in step S6101, a first counter by 1 with the behavior of sending the first SR signal; and initiates, in step S6102, a random access procedure as a response to the first counter reaching a target integer.

As an embodiment, the phrase about with the behavior of sending the first SR signal includes: as a response to the first SR signal being sent.

As an embodiment, the phrase about with the behavior of sending the first SR signal includes: when the first SR signal is sent.

As an embodiment, the phrase about with the behavior of sending the first SR signal includes: when the physical layer is instructed to send the first SR signal.

As an embodiment, the phrase about with the behavior of sending the first SR signal includes: closely following that the physical layer is instructed to send the first SR signal on one valid PUCCH resource for the first SR.

As an embodiment, the phrase about with the behavior of sending the first SR signal includes: after the physical layer is instructed to send the first SR signal on one valid PUCCH resource for the first SR.

As an embodiment, the behavior of increasing a first counter by 1 includes: increment the first counter by 1.

As an embodiment, the increased first counter is less than the target integer.

As an embodiment, the increased first counter is equal to the target integer.

As an embodiment, when the first SR signal is sent, the first counter is less than the target integer.

As an embodiment, it is determined, after the first SR signal is sent, that an SR transmission on a PUCCH resource is a prioritized SR transmission; and after the behavior of determining that an SR transmission on a PUCCH resource is a prioritized SR transmission, a random access procedure is initiated as a response to the first counter reaching a target integer.

As an embodiment, during the behavior of "determining, after the first SR signal is sent, that an SR transmission on a PUCCH resource is a prioritized SR transmission", the first counter reaches the target integer.

As an embodiment, at least one SR signal is sent within a time interval between the behavior of sending the first SR signal and the behavior of initiating a random access procedure.

As an embodiment, no SR signal is sent within a time interval between the behavior of sending the first SR signal and the behavior of initiating a random access procedure.

As an embodiment, the first counter is increased within a time interval between the behavior of sending the first SR signal and the behavior of initiating a random access procedure.

As an embodiment, the first counter is not increased within a time interval between the behavior of sending the first SR signal and the behavior of initiating a random access procedure.

As an embodiment, initiate a Random Access procedure on the SpCell.

As an embodiment, the first MAC entity of the first node U01 initiates the random access procedure.

As an embodiment, the target integer is unrelated to the type of the first buffer status report.

As an embodiment, the target integer is a first integer when the first buffer status report is the first-type buffer status report; or the target integer is a first integer when the first buffer status report is the second-type buffer status report.

As an embodiment, a random access procedure is initiated as a response to the first counter reaching the first integer; and the first buffer status report is the first-type buffer status report, or the first buffer status report is the second-type buffer status report.

As an embodiment, the target integer is related to the type of the first buffer status report; and the target integer is a first integer when the first buffer status report is the first-type buffer status report; or the target integer is a second integer when the first buffer status report is the second-type buffer status report.

As an embodiment, a random access procedure is initiated as a response to the first counter reaching the first integer; and the first buffer status report is the first-type buffer status report.

As an embodiment, a random access procedure is initiated as a response to the first counter reaching the second integer; and the first buffer status report is the second-type buffer status report.

As an embodiment, the first integer is a positive integer.

As an embodiment, the first integer is configurable.

As an embodiment, the first integer is preconfigured.

As an embodiment, the first integer is configured by the RRC message.

As an embodiment, the first integer is configured by the first signaling.

As an embodiment, the second integer is a positive integer.

As an embodiment, the second integer is configurable.

As an embodiment, the second integer is preconfigured.

As an embodiment, the second integer is configured by the RRC message.

As an embodiment, the second integer is configured by the second signaling.

As an embodiment, the second integer is default.

As an embodiment, the second integer is determined by the first node.

As an embodiment, the second integer is determined according to at least the first data packet set.

As an embodiment, the second integer is equal to 2.

As an embodiment, the second integer is equal to 4.

As an embodiment, the second integer is less than 4.

As an embodiment, the first integer and the second integer are indicated by different RRC fields.

As an embodiment, the first signaling indicates the first integer, and the second signaling indicates the second integer.

As an embodiment, the first integer and the second integer are configured for an SR configuration indicated by a same SR configuration identifier (schedulingRequestId).

As an embodiment, the first integer and the second integer are respectively configured for two SR configurations indicated by different SR configuration identifiers (schedulingRequestId).

As an embodiment, an sr-TransMax field is used for configuring the first integer.

As a sub-embodiment of this embodiment, a candidate value of the sr-TransMax field includes any one of 4, 8, 16, or 64.

As an embodiment, an sr-TransMax field is used for configuring the first integer, and another sr-TransMax field is used for configuring the second integer.

As a sub-embodiment of this embodiment, a candidate value of the another sr-TransMax field includes 2.

As a sub-embodiment of this embodiment, a candidate value of the another sr-TransMax field is less than 4.

As a sub-embodiment of this embodiment, any candidate value of the another sr-TransMax field is 4, 8, 16, or 64.

As a sub-embodiment of this embodiment, the another sr-TransMax field is an RRC field whose name includes sr-TransMax.

As a sub-embodiment of this embodiment, the another sr-TransMax field is used for configuring an sr-TransMax field other than the first integer.

As a sub-embodiment of this embodiment, the another sr-TransMax field is sr-TransMax-r18.

As a sub-embodiment of this embodiment, the another sr-TransMax field is sr-TransMax-v1800.

As a sub-embodiment of this embodiment, the another sr-TransMax field is sr-TransMax-v1801.

As an embodiment, a SchedulingRequestToAddMod field is used for configuring the first integer and the second integer.

As an embodiment, a SchedulingRequestToAddMod field is used for configuring the first integer, and another SchedulingRequestToAddMod field is used for configuring the second integer.

As an embodiment, the first integer is used for an SR triggered by the first-type buffer status report, and the second integer is used for an SR triggered by the second-type buffer status report.

As an embodiment, the first integer is used for an SR triggered by the first-type buffer status report and an SR triggered by the second-type buffer status report.

As an embodiment, as a response to the first counter reaching the first integer, notify RRC to release PUCCH for all Serving Cells.

As an embodiment, as a response to the first counter reaching the first integer, notify RRC to release SRS for all Serving Cells.

As an embodiment, as a response to the first counter reaching the first integer, clear any configured downlink assignments and uplink grants.

As an embodiment, as a response to the first counter reaching the first integer, clear any PUSCH resources for semi-persistent CSI reporting.

As an embodiment, as a response to the first counter reaching the first integer, cancel all pending SRs.

As an embodiment, the first MAC entity of the first node U01 increases the first counter by 1.

As an embodiment, the first MAC entity of the first node U01 initiates the random access procedure.

### Embodiment 7

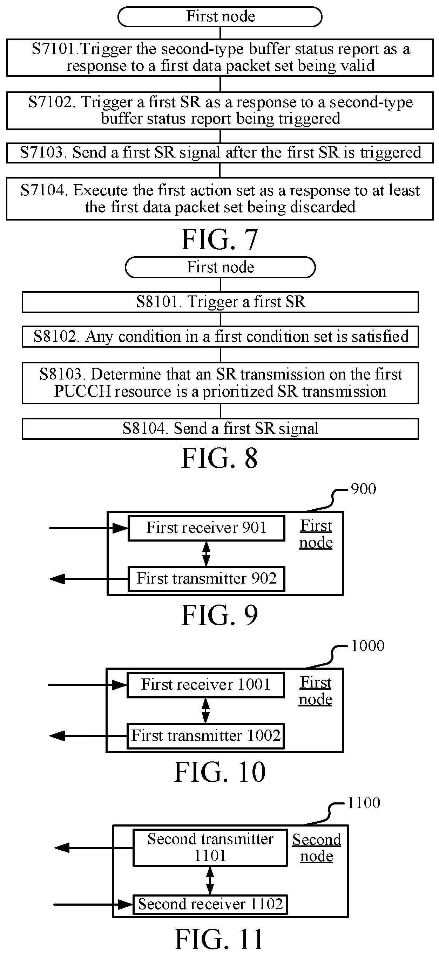

Embodiment 7 illustrates a flowchart of executing a first action set according to an embodiment of this application, as shown in FIG. 7. It should be particularly noted that the sequence in this example does not limit a step sequence and an implementation sequence in this application.

A **first node U01** triggers, in step S7101, the second-type buffer status report as a response to a first data packet set being valid; triggers, in step S7102, a first SR as a response to a second-type buffer status report being triggered; sends, in step S7103, a first SR signal after the first SR is triggered; executes, in step S7104, a first action set as a response to at least the first data packet set being discarded, where the first action set includes at least one of canceling the second-type buffer status report or canceling the first SR.

In Embodiment 7, a running state of the first timer is used for determining whether to send an SR signal for the first SR; and the first-type buffer status report includes a regular BSR, and the second-type buffer status report is different from the first-type buffer status report; and the first data packet set includes at least one data packet, and each data packet in the first data packet set is a data packet above a MAC sublayer.

As an embodiment, the first timer is not started with the behavior of sending the first SR signal.

As an embodiment, the first timer is started with the behavior of sending the first SR signal, and the first timer is set to the second time length.

As an embodiment, the first timer is started with the behavior of sending the first SR signal, and the first timer is set to the first time length.

As an embodiment, the first counter is increased by 1 with the behavior of sending the first SR signal.

As an embodiment, a random access procedure is initiated as a response to the first counter reaching the first integer.

As an embodiment, a random access procedure is initiated as a response to the first counter reaching the second integer.

As an embodiment, the first data packet set is discarded after the first SR signal is sent.

As an embodiment, when the first data packet set is discarded, the first counter does not reach the first integer.

As an embodiment, when the first data packet set is discarded, the first counter does not reach the second integer.

As an embodiment, the first timer is running when the first data packet set is discarded.

As an embodiment, the first timer is not running when the first data packet set is discarded.

As an embodiment, when the first data packet set is discarded, the first SR is pending.

As an embodiment, the first SR is not canceled before the first data packet set is discarded.

As an embodiment, before the first data packet set is discarded, one MAC CE for the second-type buffer status report is not sent.

As an embodiment, before the first data packet set is discarded, one MAC CE for the second-type buffer status report is sent.

As an embodiment, the first data packet set is a data packet set.

As an embodiment, the first data packet set is a PDU set.

As an embodiment, the first data packet set includes at least one data packet.

As an embodiment, the first data packet set includes at least two data packets.

As an embodiment, the first data packet set includes one or more data packets.

As an embodiment, the first data packet set includes a limited number of data packets.

As an embodiment, the first data packet set is associated with one PDCP entity.

As an embodiment, the first data packet set is associated with a plurality of PDCP entities.

As an embodiment, the first data packet set is not associated with a plurality of PDCP entities.

As an embodiment, the first data packet set is associated with only one DRB.

As an embodiment, the first data packet set is associated with a plurality of DRBs.

As an embodiment, the first data packet set is associated with one or more DRBs.

As an embodiment, each data packet in the first data packet set is an uplink data packet.

As an embodiment, each data packet in the first data packet set is a backhaul link data packet.

As an embodiment, each data packet in the first data packet set is a sidelink data packet.

In this embodiment, at least one data packet in the first data packet set is a buffered data packet.

In this embodiment, each data packet in the first data packet set is a buffered data packet.

In this embodiment, at least one data packet in the first data packet set is an expected data packet.

In this embodiment, each data packet in the first data packet set is an expected data packet.

As an embodiment, all data packets in the first data packet set belong to a same logical channel group (LCG).

As an embodiment, two data packets in the first data packet set belong to different LCGs.

As an embodiment, at least some bits of a data packet in the first data packet set are generated by an XR server.

As an embodiment, at least some bits of a data packet in the first data packet set are generated by an Edge server.

As an embodiment, at least some bits of a data packet in the first data packet set are generated by a core network device.

As an embodiment, at least some bits of a data packet in the first data packet set are generated by an access network device.

As an embodiment, a data packet in the first data packet set is a slice.

As an embodiment, a data packet in the first data packet set is a PDU.

As an embodiment, a data packet in the first data packet set is a payload of a PDU.

As an embodiment, a data packet in the first data packet set is a PDU of a Uu interface.

As an embodiment, a data packet in the first data packet set is a PDU of a PC5 interface.

As an embodiment, a data packet in the first data packet set is a PDU of an Xn interface.

As an embodiment, a data packet in the first data packet set is a PDU on a sidelink.

As an embodiment, a data packet in the first data packet set is a PDU above a Service Data Adaptation Protocol (SDAP) layer.

As an embodiment, a data packet in the first data packet set is a PDU above a MAC sublayer.

As an embodiment, a data packet in the first data packet set is an application layer PDU.

As an embodiment, a data packet in the first data packet set is a non-access stratum PDU.

As an embodiment, a data packet in the first data packet set is an RLC PDU.

As an embodiment, a data packet in the first data packet set is a to-be-initially-transmitted RLC data PDU.

As an embodiment, a data packet in the first data packet set is a to-be-retransmitted RLC data PDU for an RLC Acknowledged Mode (AM).

As an embodiment, a data packet in the first data packet set is an PDCP PDU.

As an embodiment, a data packet in the first data packet set is a PDCP data PDU.

As an embodiment, a data packet in the first data packet set is a to-be-retransmitted PDCP data PDU for an AM DRB.

As an embodiment, a data packet in the first data packet set is a PDCP control PDU.

As an embodiment, a data packet in the first data packet set is an SDAP PDU.

As an embodiment, a data packet in the first data packet set is an Internet Protocol (IP) packet.

As an embodiment, a data packet in the first data packet set is a payload of an IP packet.

As an embodiment, a data packet in the first data packet set is an IP PDU.

As an embodiment, a data packet in the first data packet set is a SDU.

As an embodiment, a data packet in the first data packet set is a payload of a SDU.

As an embodiment, a data packet in the first data packet set is a SDU of a Uu interface.

As an embodiment, a data packet in the first data packet set is a SDU of a PC5 interface.

As an embodiment, a data packet in the first data packet set is a SDU of an Xn interface.

As an embodiment, a data packet in the first data packet set is a SDU on a sidelink.

As an embodiment, a data packet in the first data packet set is a SDU above an SDAP layer.

As an embodiment, a data packet in the first data packet set is a data packet of an SDAP sublayer.

As an embodiment, a data packet in the first data packet set is a SDU above a MAC sublayer.

As an embodiment, a data packet in the first data packet set is an application layer SDU.

As an embodiment, a data packet in the first data packet set is a non-access stratum SDU.

As an embodiment, a data packet in the first data packet set is a data packet of an RLC sublayer.

As an embodiment, a data packet in the first data packet set is an RLC SDU.

As an embodiment, a data packet in the first data packet set is an RLC SDU segment.

As an embodiment, a data packet in the first data packet set is a data packet of an PDCP sublayer.

As an embodiment, a data packet in the first data packet set is an PDCP PDU.

As an embodiment, a data packet in the first data packet set is an PDCP SDU.

As an embodiment, a data packet in the first data packet set is a to-be-retransmitted PDCP SDU for an AM DRB.

As an embodiment, a data packet in the first data packet set is an SDAP SDU.

As an embodiment, a data packet in the first data packet set is a to-be-retransmitted data packet.

As an embodiment, a data packet in the first data packet set is generated by a protocol entity of a user plane.

As an embodiment, a data packet in the first data packet set includes only data of a user plane.

As an embodiment, a DRB is used for a data packet in the first data packet set.

As an embodiment, a data packet in the first data packet set is a PDU of the first protocol layer.

As an embodiment, a data packet in the first data packet set is formed at the first protocol layer.

As an embodiment, an SDU included in a data packet in the first data packet set is encapsulated into a PDU of the first protocol layer at the first protocol layer.

As an embodiment, an SDU of a data packet in the first data packet set is encapsulated at the first protocol layer and has a protocol header added.

As an embodiment, all bits of a data packet in the first data packet set are generated at the first protocol layer.

As an embodiment, at least a packet header of a data packet in the first data packet set is generated at the first protocol layer.

As an embodiment, a data packet in the first data packet set is transmitted by using a DRB.

As an embodiment, a data packet in the first data packet set is mapped to a DRB.

As an embodiment, at least some bits of a data packet in the first data packet set are transmitted by using a DRB.

As an embodiment, all bits of a data packet in the first data packet set are transmitted by using a DRB.

As an embodiment, an SDU of a data packet in the first data packet set is a PDCP PDU.

As an embodiment, a transmission resource occupied by a data packet in the first data packet set includes a DRB.

As an embodiment, a transmission resource occupied by a data packet in the first data packet set is associated with a DRB.

As an embodiment, a field of a packet header of a data packet in the first data packet set is a D/C field.

As an embodiment, a field of a packet header of a data packet in the first data packet set indicates that the type of any data packet in the first data packet set is data.

As an embodiment, each data packet in the first data packet set is generated by a PDCP sublayer.

As an embodiment, each data packet in the first data packet set is generated by a PDCP sublayer or an RLC sublayer.

As an embodiment, each data packet in the first data packet set is generated by an SDAP layer.

As an embodiment, each data packet in the first data packet set is generated by an IP layer.

As an embodiment, each data packet in the first data packet set is generated by a transport layer.

As an embodiment, each data packet in the first data packet set is generated by an application layer.

As an embodiment, each data packet in the first data packet set is generated by a transport network layer.

As an embodiment, each data packet in the first data packet set is generated by a network layer.

As an embodiment, each data packet in the first data packet set belongs to one of a PDCP sublayer or an RLC sublayer.

As an embodiment, each data packet in the first data packet set belongs to a PDCP sublayer.

As an embodiment, each data packet in the first data packet set belongs to a RLC sublayer.

As an embodiment, an SDU of each data packet in the first data packet set is transmitted by using a DRB.

As an embodiment, each data packet in the first data packet set is transmitted by using a DRB.

As an embodiment, each data packet in the first data packet set is mapped to a DRB.

As an embodiment, no data packet in the first data packet set includes a PDU of a control plane.

As an embodiment, no data packet in the first data packet set includes control signaling.

As an embodiment, no data packet in the first data packet set includes RRC signaling.

As an embodiment, no data packet in the first data packet set is a control PDU

As an embodiment, no data packet in the first data packet set has an SDU transmitted by using a signaling radio bearer (SRB).

As an embodiment, any two data packets in the first data packet set have a dependency relationship.

As an embodiment, any two data packets in the first data packet set are mapped to a same logical channel.

As an embodiment, two data packets in the first data packet set are mapped to different LCGs.

As an embodiment, any two data packets in the first data packet set are mapped to a same LCG.

As an embodiment, any two data packets in the first data packet set belong to a same LCG.

As an embodiment, any two data packets in the first data packet set belong to a same logical channel of a same LCG.

As an embodiment, any two data packets in the first data packet set belong to different logical channels of a same LCG.

As an embodiment, any two data packets in the first data packet set belong to different LCGs.

As an embodiment, any two data packets in the first data packet set belong to a same service.

As an embodiment, any two data packets in the first data packet set belong to a same PDU session.

As an embodiment, any two data packets in the first data packet set are generated by a same protocol entity.

As an embodiment, DRBs respectively used by any two data packets in the first data packet set have an association.

As an embodiment, a DRB used by one data packet in the first data packet set is a DRB of a master cell group (MCG), and a DRB used by another data packet in the first data packet set is a DRB of an SCG.

As an embodiment, a DRB used by at least one data packet in the first data packet set is a split DRB.

As an embodiment, each DRB used by any two data packets in the first data packet set is a DRB of an MCG.

As an embodiment, each DRB used by any two data packets in the first data packet set is a DRB of a secondary cell group (SCG).

As an embodiment, a same DRB is used by any two data packets in the first data packet set.

As an embodiment, different DRBs are used by two data packets in the first data packet set.

As an embodiment, different DRB IDs are used by two data packets in the first data packet set.

As an embodiment, any two data packets in the first data packet set are associated with a same QoS flow.

As an embodiment, any two data packets in the first data packet set have different packet headers.

As an embodiment, any two data packets in the first data packet set have different sequence numbers.

As an embodiment, any two data packets in the first data packet set occupy different logical channels.

As an embodiment, any two data packets in the first data packet set occupy a same logical channel.

As an embodiment, any two data packets in the first data packet set are processed by a same MAC entity.

As an embodiment, any two data packets in the first data packet set are processed by different MAC entities.

As an embodiment, any two data packets in the first data packet set have at least some different bits.

As an embodiment, any two data packets in the first data packet set have different sizes.

As an embodiment, any two data packets in the first data packet set have different SDUs.

As an embodiment, any two data packets in the first data packet set have different protocol headers or sub-headers.

As an embodiment, any two data packets in the first data packet set have protocol headers with at least one different field.

As an embodiment, any two data packets in the first data packet set are each a PDU of a user plane.

As an embodiment, any two data packets in the first data packet set are each generated by a protocol layer of a user plane.

As an embodiment, two data packets in the first data packet set are associated with different QoS flows.

As an embodiment, two data packets in the first data packet set have a same packet header.

As an embodiment, two data packets in the first data packet set have a same sequence number.

As an embodiment, two data packets in the first data packet set have a same size.

As an embodiment, two data packets in the first data packet set are mapped to different logical channels.

As an embodiment, two data packets in the first data packet set are generated by different protocol entities.

As an embodiment, any two data packets in the first data packet set are generated by a same protocol entity.

As an embodiment, a relay is used for each data packet in the first data packet set.

As an embodiment, no relay is used for any data packet in the first data packet set.

As an embodiment, no relay is used for a DRB used by a data packet in the first data packet set, and a relay is used for a DRB used by another data packet in the first data packet set.

As an embodiment, each data packet in the first data packet set corresponds to the first identifier.

As an embodiment, the first identifier is configured for each data packet in the first data packet set.

As an embodiment, each data packet in the first data packet set is indicated with the first identifier.

As an embodiment, each data packet in the first data packet set is marked with the first identifier.

As an embodiment, the first identifier indicates a DRB.

As an embodiment, the first identifier indicates a PDU set.

As an embodiment, the first identifier indicates a PDCP set.

As an embodiment, the first identifier indicates a QoS flow.

As an embodiment, the first identifier indicates a group of data packets.

As an embodiment, the first identifier indicates at least one data packet.

As an embodiment, the first identifier indicates a data packet set.

As an embodiment, the first identifier indicates at least one data packet set.

As an embodiment, the first identifier is configured at the PDCP sublayer.

As an embodiment, the first identifier is configured at a higher layer of the PDCP sublayer.

As an embodiment, the first identifier is used for identifying a group of PDUs.

As an embodiment, the first identifier is used for determining a PDU set.

As an embodiment, the first identifier is associated with at least one LCG.

As an embodiment, the first identifier is associated with a plurality of LCGs.

As an embodiment, the first identifier is associated with an LCG.

As an embodiment, the first identifier includes at least one DRB ID.

As an embodiment, the first identifier is associated with a plurality of DRBs.

As an embodiment, the first identifier is associated with an DRB.

As an embodiment, the first identifier includes one or more PDCP SNs.

As an embodiment, the first identifier includes one or more PDCP COUNTs.

As an embodiment, the first identifier includes a QoS flow ID.

As an embodiment, the first identifier includes a PDU session ID.

As an embodiment, the first identifier is an integer.

As an embodiment, the first identifier is a time interval.

As an embodiment, the first identifier is a display identifier.

As an embodiment, the first identifier is a PDU set ID.

As an embodiment, the first identifier is a DRB ID.

As an embodiment, the phrase about as a response to a first data packet set being valid includes: as a response to at least the first data packet set being valid.

As an embodiment, the phrase about as a response to a first data packet set being valid includes: as a response to at least the first data packet set becomes available to the MAC entity.

As an embodiment, the phrase about as a response to a first data packet set being valid includes: as a response to at least one data packet in the first data packet set being valid.

As an embodiment, the phrase about as a response to a first data packet set being valid includes: as a response to each data packet in the first data packet set being valid.

As an embodiment, the phrase about as a response to a first data packet set being valid includes: as a response to any data packet in the first data packet set being valid.

As an embodiment, the being available includes: becomes available.

As an embodiment, the being available includes: becoming available for the first MAC entity.

As an embodiment, the being available includes: becomes available to the MAC entity.

As an embodiment, the behavior of triggering a first buffer status report includes triggering a BSR.

As an embodiment, the behavior of triggering a first buffer status report includes triggering a BSR for a data packet set.

As an embodiment, the first MAC entity of the first node U01 triggers the first buffer status report.

As an embodiment, the first data packet set being valid is used for triggering the first buffer status report.

As an embodiment, if uplink data in at least the first data packet set is valid for the first MAC entity, the second-type buffer status report is triggered.

As an embodiment, if uplink data of one logical channel belonging to one LCG is valid for the first MAC entity, and the uplink data valid for the first MAC entity includes all or some data packets in at least the first data packet set, the second-type buffer status report is triggered.

As an embodiment, if uplink data does not include a data packet in any data packet set, the second-type buffer status report is not triggered.

As an embodiment, only when uplink data includes at least a data packet in a data packet set, the second-type buffer status report is triggered.

As an embodiment, the second-type buffer status report is used for reporting a data volume of at least the first data packet set.

As an embodiment, the second-type buffer status report is used for reporting a data volume of the first data packet set.

As an embodiment, the second-type buffer status report is specific to at least the first data packet set.

As an embodiment, the second-type buffer status report is specific to a logical channel to which at least the first data packet set belongs.

As an embodiment, the second-type buffer status report is specific to an LCG with a logical channel to which at least the first data packet set belongs.

As an embodiment, the second-type buffer status report is specific to only the first data packet set.

As an embodiment, the second-type buffer status report is specific to a logical channel to which only the first data packet set belongs.

As an embodiment, the second-type buffer status report is specific to an LCG with a logical channel to which only the first data packet set belongs.

As an embodiment, at least the first data packet set being discarded is used for triggering execution of the first action set.

As an embodiment, the first data packet set being discarded includes: the first data packet set being discarded at a higher layer of an SDAP sublayer.

As an embodiment, the first data packet set being discarded includes: the first data packet set being discarded at an SDAP sublayer.

As an embodiment, the first data packet set being discarded includes: the first data packet set being discarded at an PDCP sublayer.

As an embodiment, the first data packet set being discarded includes: the first data packet set being discarded at an RLC sublayer.

As an embodiment, the first data packet set being discarded includes: the first data packet set being discarded at an MAC sublayer.

As an embodiment, the first data packet set being discarded includes: any data packet in the first data packet set being discarded.

As an embodiment, the first data packet set being discarded includes: at least one data packet in the first data packet set being discarded.

As an embodiment, the first data packet set being discarded includes: each data packet in the first data packet set being discarded.

As an embodiment, the first data packet set being discarded includes: a buffered data packet belonging to the first data packet set being discarded.

As an embodiment, the first data packet set being discarded includes: a data packet in a buffer belonging to the first data packet set being discarded.

As an embodiment, as a response to at least the first data packet set being discarded includes: as a response to the first indication being received, where the first indication is used for indicating that the first data packet set is discarded.

As an embodiment, the first action set is executed as a response to the MAC sublayer of the first node receiving the first indication from a higher layer of the first node.

As an embodiment, the MAC sublayer of the first node receives a first indication from a higher layer of the first node, where the first indication is used for indicating that the first data packet set is discarded.

As an embodiment, as a response to the behavior of discarding the first data packet set, a higher layer of the first node sends a first indication to the MAC sublayer of the first node.

As an embodiment, as a response to determining to discard the first data packet set, a higher layer of the first node sends a first indication to the MAC sublayer of the first node.

As an embodiment, once the first data packet set is discarded, a higher layer of the first node sends a first indication to the MAC sublayer of the first node.

As an embodiment, once it is determined to discard the first data packet set, a higher layer of the first node sends a first indication to the MAC sublayer of the first node.

As an embodiment, at least the first data packet set being discarded is used for triggering execution of the first action set.

As an embodiment, when the first data packet set is discarded, the first action set is executed.

As an embodiment, when it is determined to discard the first data packet set, the first action set is executed.

As an embodiment, before the first data packet set is discarded, the first action set is executed.

As an embodiment, after the first data packet set is discarded, the first action set is executed.

As an embodiment, when the first data packet set is discarded, and there is no uplink data outside the first data packet set, the first action set is executed.

As an embodiment, when the first data packet set is discarded, and there is no first buffer status report triggered by a data packet set other than the first data packet set, the first action set is executed.

As an embodiment, when the first data packet set is discarded, and the logical channel to which the first data packet set belongs has no uplink data outside the first data packet set, the first action set is executed.

As an embodiment, when the first data packet set is discarded, and there is no first buffer status report triggered by a data packet set outside a logical channel to which the first data packet set belongs, the first action set is executed.

As an embodiment, when the first data packet set is discarded, and the LCG to which the first data packet set belongs has no uplink data outside the first data packet set, the first action set is executed.

As an embodiment, when the first data packet set is discarded, and there is no first buffer status report triggered by a data packet set outside an LCG to which the first data packet set belongs, the first action set is executed.

As an embodiment, the first action set includes canceling the second-type buffer status report.

As an embodiment, the first action set includes canceling the second-type buffer status report and canceling the first SR.

As an embodiment, as a response to at least the first data packet set being discarded, the second-type buffer status report is canceled.

As an embodiment, as a response to at least the first data packet set being discarded, the first SR is canceled; and when the first data packet set is discarded, the first SR is pending.

As an embodiment, the first action set includes stopping the first timer; and whether to apply the first time length is related to the type of the first buffer status report.

As an embodiment, as a response to at least the first data packet set being discarded, the first action set includes stopping the first timer; and the first timer is running when the first data packet set is discarded.

As an embodiment, the first action set includes canceling the second-type buffer status report, canceling the first SR, and stopping the first timer.

As an embodiment, the first MAC entity of the first node U01 stops the first timer.

As an embodiment, the first MAC entity of the first node U01 cancels the first SR.

As an embodiment, the first MAC entity of the first node U01 cancels the first buffer status report.

As an embodiment, the first MAC entity of the first node U01 executes the first action set.

### Embodiment 8

Embodiment 8 illustrates a flowchart of determining that an SR transmission on a first PUCCH resource is a prioritized SR transmission according to an embodiment of this application, as shown in FIG. 8.

A **first node U01** triggers, in step S8101, a first SR as a response to a first buffer status report being triggered; determines, in step S8102, that any condition in a first condition set is satisfied after the first SR is triggered; determines, in step S8103 as a response to any condition in a first condition set being satisfied, that an SR transmission on a first PUCCH resource is a prioritized SR transmission; and sends, in step S8104, a first SR signal.

In Embodiment 8, where the first PUCCH resource is used for sending the first SR signal; the first condition set includes at least a first condition and a second condition; the first condition is that the first PUCCH resource does not overlap with any SL-SCH resource and the first PUCCH resource does not overlap with any UL-SCH resource; and the second condition includes that the first PUCCH resource overlaps with a second resource block, where the second resource block is used for shared channel transmission.

As an embodiment, the second condition is unrelated to whether the first buffer status report triggering the first SR is a first-type buffer status report or a second-type buffer status report.

As an embodiment, the behavior of determining that an SR transmission on a first PUCCH resource is a prioritized SR transmission includes: considering an SR transmission on the first PUCCH resource as a prioritized SR transmission.

As an embodiment, the behavior of determining that an SR transmission on a first PUCCH resource is a prioritized SR transmission includes: consider the first SR transmission as a prioritized SR transmission.

As an embodiment, the behavior of determining that an SR transmission on a first PUCCH resource is a prioritized SR transmission includes: preferentially sending the SR signal on the first PUCCH resource for the first PUCCH resource and the second resource block that overlap with each other.

As an embodiment, the behavior of determining that an SR transmission on a first PUCCH resource is a prioritized SR transmission includes: considering that the former one of the first PUCCH resource and the second resource block is prioritized.

As an embodiment, the behavior of determining that an SR transmission on a first PUCCH resource is a prioritized SR transmission is used for determining that the first SR signal is sent on the first PUCCH resource.

As an embodiment, with the behavior of determining that an SR transmission on a first PUCCH resource is a prioritized SR transmission, it is considered that the second resource block is a de-prioritized uplink grant; and simultaneous transmission on the first PUCCH resource and the second resource block is not allowed.

As an embodiment, with the behavior of determining that an SR transmission on a first PUCCH resource is a prioritized SR transmission, at least one of cg-RetransmissionTimer or configuredGrantTimer of a HARQ process corresponding to the second resource block is stopped.

As a sub-embodiment of this embodiment, the second resource block is a configured uplink grant.

As a sub-embodiment of this embodiment, the second resource block is a configured uplink grant, and autonomousTx is configured for the second resource block.

As a sub-embodiment of this embodiment, the second resource block is a configured uplink grant, autonomousTx is configured for the second resource block, and a PUCSH of the second resource block already starts.

As an embodiment, the first PUCCH resource is used for an SR transmission for the first SR.

As an embodiment, the first PUCCH resource is used for carrying the first SR signal.

As an embodiment, the first SR signal is carried by the first PUCCH resource.

As an embodiment, the first PUCCH resource is a PUCCH resource.

As an embodiment, the first PUCCH resource is a PUCCH resource for a valid PUCCH occasion of the first SR.

As an embodiment, the first PUCCH resource is a PUCCH resource for an SR transmission occasion of the first SR.

As an embodiment, the first PUCCH resource does not overlap with a measurement gap.

As an embodiment, the first PUCCH resource includes a time-domain resource.

As an embodiment, the first PUCCH resource includes a frequency-domain resource.

As an embodiment, the first PUCCH resource includes at least one of a time-domain resource, a frequency-domain resource, a space-domain resource, or a code-domain resource.

As an embodiment, the first PUCCH resource corresponds to an SR transmission occasion.

As an embodiment, an SR transmission occasion corresponding to the first PUCCH resource is a valid SR transmission occasion.

As an embodiment, the first timer is not running at an SR transmission occasion corresponding to the first PUCCH resource.

As an embodiment, the first SR signal is sent on the first PUCCH resource.

As an embodiment, the first MAC entity has an SR transmission occasion on the valid PUCCH resource for the SR configured.

As an embodiment, the first condition is satisfied; and as a response to the first condition being satisfied, it is determined that an SR transmission on the first PUCCH resource is a prioritized SR transmission.

As an embodiment, the second condition is satisfied; and as a response to the second condition being satisfied, it is determined that an SR transmission on the first PUCCH resource is a prioritized SR transmission.

As an embodiment, the phrase that the first PUCCH resource overlaps with a second resource block includes: the first PUCCH resource overlaps with the second resource block in a time domain.

As an embodiment, the phrase that the first PUCCH resource overlaps with a second resource block includes: the first PUCCH resource overlaps with the second resource block in a frequency domain.

As an embodiment, the phrase that the first PUCCH resource overlaps with a second resource block includes: a time-frequency resource occupied by the first PUCCH resource overlaps with a time-frequency resource occupied by the second resource block.

As an embodiment, the phrase that the first PUCCH resource overlaps with a second resource block includes: an SR occasion corresponding to the first PUCCH resource overlaps with a time-frequency resource occupied by the second resource block.

As an embodiment, the first MAC entity of the first node U01 determines that an SR transmission on the first PUCCH resource is a prioritized SR transmission.

As an embodiment, it is first determined that an SR transmission on the first PUCCH resource is a prioritized SR transmission, and then the first SR signal is sent.

As an embodiment, only when it is determined that an SR transmission on the first PUCCH resource is a prioritized SR transmission, the first SR signal is sent.

As an embodiment, if it is determined that an SR transmission on the first PUCCH resource is not a prioritized SR transmission, the first SR signal is not sent.

As an embodiment, if it is determined that an SR transmission on the first PUCCH resource is not a prioritized SR transmission, the second resource block is considered as a prioritized uplink grant.

As an embodiment, if it is determined that an SR transmission on the first PUCCH resource is not a prioritized SR transmission, sending is performed on the second resource block.

As an embodiment, if it is determined that an SR transmission on the first PUCCH resource is not a prioritized SR transmission, the first timer is not started.

As an embodiment, if it is determined that an SR transmission on the first PUCCH resource is not a prioritized SR transmission, the first counter is not increased by 1.

As an embodiment, the second condition is that the first PUCCH resource overlaps with the second resource block, and the first MAC entity can simultaneously process SR transmission on the first PUCCH resource and transmission on the second resource block; and the second resource block is an SL-SCH resource.

As an embodiment, the second condition is that the first PUCCH resource overlaps with the second resource block, the first MAC entity is configured with lch-basedPrioritization, the first PUCCH resource does not overlap with PUSCH duration of an uplink grant that is received in a random access response (RAR), the first PUCCH resource does not overlap with PUSCH duration of an uplink grant addressed to a Temporary C-RNTI, the first PUCCH resource does not overlap with PUSCH duration of an MSGA payload, the physical layer may send the first SR signal on the first PUCCH resource, a priority of a logical channel for triggering the first SR is higher than a priority of an uplink grant of the second resource block, the uplink grant has not been de-prioritized, and simultaneous transmission on the first PUCCH resource and the second resource block is not allowed by simultaneousPUCCH-PUSCH, simultaneousPUCCH-PUSCH-SecondaryPUCCHgroup, or simultaneousSR-PUSCH-diffPUCCHgroups; and the second resource block is an UL-SCH resource.

As an embodiment, the second condition is that the first PUCCH resource overlaps with the second resource block, both sl-PrioritizationThres and ul-PrioritizationThres are configured, the second resource block carries a MAC PDU, a value of a priority of the first SR is less than sl-PrioritizationThres, a value of a highest priority of a logical channel in the MAC PDU is greater than or equal to ul-PrioritizationThres, the MAC PDU does not include any prioritized MAC CE, and the MAC PDU is not prioritized by a higher layer; and the second resource block is an UL-SCH resource.

As an embodiment, the second condition is that the first PUCCH resource overlaps with the second resource block, the first MAC entity cannot simultaneously process SR transmission on the first PUCCH resource and transmission on the second resource block, and a priority of the first SR is higher than a priority of the MAC PDU for the second resource block; and the second resource block is an SL-SCH resource.

As an embodiment, the second condition is that the first PUCCH resource overlaps with the second resource block, the first MAC entity cannot simultaneously process SR transmission on the first PUCCH resource and transmission on the second resource block, and transmission on the second resource block is not prioritized or a value of a priority of a logical channel for triggering the first SR is less than ul-PrioritizationThres; and the second resource block is an SL-SCH resource.

As an embodiment, the second resource block is used for a UL-SCH.

As an embodiment, the second resource block is used for a SL-SCH.

As an embodiment, the second resource block is an UL-SCH resource.

As an embodiment, the second resource block is an SL-SCH resource.

As an embodiment, the second resource block carries a MAC PDU; and the MAC PDU does not include any prioritized MAC CE, and the MAC PDU is not prioritized by a higher layer.

As an embodiment, the second resource block carries a MAC PDU; and the MAC PDU includes a prioritized MAC CE, or the MAC PDU is prioritized by a higher layer.

As an embodiment, transmission on the second resource block is prioritized.

As an embodiment, transmission on the second resource block is not prioritized.

As an embodiment, the second resource block does not include an uplink grant received in a random access response, the second resource block does not include an uplink grant addressed to a Temporary C-RNTI, and the second resource block does not include an uplink grant of an MSGA payload.

As an embodiment, a priority of a logical channel for triggering the first SR is determined according to section 5.4.5 of 3GPP TS38.321.

As an embodiment, a priority of a logical channel for triggering the first SR is determined according to section 5.22.1.5 of 3GPP TS38.321.

As an embodiment, a priority of an uplink grant of the second resource block is determined according to section 5.4.1 of 3GPP TS38.321.

As an embodiment, a priority of an uplink grant of the second resource block is determined according to section 5.4.3.1.3 of 3GPP TS38.321.

As an embodiment, a priority of an uplink grant of the second resource block is determined according to section 5.22.1.3.1a of 3GPP TS38.321.

As an embodiment, the priority of the logical channel for triggering the first SR corresponds to the priority of the first SR.

As an embodiment, the second condition is related to whether the first buffer status report triggering the first SR is the latter one of a first-type buffer status report or a second-type buffer status report; and the first-type buffer status report includes a regular BSR, and the second-type buffer status report is different from the first-type buffer status report.

As an embodiment, the second condition is related to that the first buffer status report triggering the first SR is the second-type buffer status report.

As an embodiment, the second condition is related to whether the first buffer status report triggering the first SR is the latter one of a first-type buffer status report or a second-type buffer status report.

As an embodiment, that the first buffer status report triggering the first SR is the second-type buffer status report is used for determining that the value of the priority of the logical channel triggering the first SR is equal to 0.

As an embodiment, that the first buffer status report triggering the first SR is the second-type buffer status report is used for determining that the priority of the logical channel triggering the first SR is the highest.

As an embodiment, that the first buffer status report triggering the first SR is the second-type buffer status report is used for determining that the priority of the logical channel for triggering the first SR is higher than the priority of the uplink grant of the second resource block.

As an embodiment, that the first buffer status report triggering the first SR is the second-type buffer status report is used for determining that the value of the priority of the first SR is less than sl-PrioritizationThres.

As an embodiment, that the first buffer status report triggering the first SR is the second-type buffer status report is used for determining that the priority of the first SR is higher than the priority of the MAC PDU for the second resource block.

As an embodiment, that the first buffer status report triggering the first SR is the second-type buffer status report is used for determining that the value of the priority of the logical channel for triggering the first SR is less than ul-PrioritizationThres.

As an embodiment, the second condition includes that the first PUCCH resource overlaps with the second resource block, the first PUCCH resource does not overlap with PUSCH duration of an uplink grant that is received in a random access response, the first PUCCH resource does not overlap with PUSCH duration of an uplink grant addressed to a Temporary C-RNTI, the first PUCCH resource does not overlap with PUSCH duration of an MSGA payload, the physical layer may send the first SR signal on the first PUCCH resource, and simultaneous transmission on the first PUCCH resource and the second resource block is not allowed by simultaneousPUCCH-PUSCH, simultaneousPUCCH-PUSCH-SecondaryPUCCHgroup, or simultaneousSR-PUSCH-diffPUCCHgroups; the second condition is unrelated to lch-basedPrioritization, or the second condition is unrelated to whether a priority of a logical channel for triggering the first SR is higher than a priority of an uplink grant of the second resource block; and the second resource block is an UL-SCH resource.

As an embodiment, the second condition includes that the first PUCCH resource overlaps with the second resource block, and the first buffer status report triggering the first SR is the second-type buffer status report; the second condition is unrelated to sl-PrioritizationThres or ul-PrioritizationThres; and the second resource block is an UL-SCH resource.

As an embodiment, the second condition includes that the first PUCCH resource overlaps with the second resource block, the first MAC entity cannot simultaneously process SR transmission on the first PUCCH resource and transmission on the second resource block, and the first buffer status report triggering the first SR is the second-type buffer status report; the second condition is unrelated to whether a priority of the first SR is higher than a priority of the MAC PDU for the second resource block; and the second resource block is an SL-SCH resource.

As an embodiment, the second condition includes that the first PUCCH resource overlaps with the second resource block, the first MAC entity cannot simultaneously process SR transmission on the first PUCCH resource and transmission on the second resource block, and the first buffer status report triggering the first SR is the second-type buffer status report; the second condition is unrelated to whether transmission on the second resource block is prioritized or whether a value of a priority of a logical channel for triggering the first SR is less than ul-PrioritizationThres; and the second resource block is an SL-SCH resource.

### Embodiment 9

Embodiment 9 illustrates a structural block diagram of a processing apparatus used in a first node according to an embodiment of this application, as shown in FIG. 9. In FIG. 9, a processing apparatus 900 in a first node includes a first receiver 901 and a first transmitter 902.

The first receiver 901 is configured to receive first signaling, where the first signaling indicates a first time length of a first timer; and
the first transmitter 902 is configured to trigger a first SR as a response to a first buffer status report being triggered; and send a first SR signal after the first SR is triggered, where with the behavior of sending the first SR signal, whether to start the first timer is related to a type of the first buffer status report;

In Embodiment 9, the behavior about whether to start the first timer is related to a type of the first buffer status report includes: starting the first timer only when the first buffer status report is the former one of a first-type buffer status report and a second-type buffer status report; and a running state of the first timer is used for determining whether to send an SR signal for the first SR; and the first-type buffer status report includes a regular BSR, and the second-type buffer status report is different from the first-type buffer status report.

As an embodiment, the behavior about whether to start the first timer is related to a type of the first buffer status report includes: skipping starting the first timer when the first buffer status report is the latter one of the first-type buffer status report and the second-type buffer status report.

As an embodiment, the first transmitter 902 is configured to: increase a first counter by 1 with the behavior of sending the first SR signal; and initiate a random access procedure as a response to the first counter reaching a target integer, where the target integer is related to the type of the first buffer status report; and the target integer is a first integer when the first buffer status report is the first-type buffer status report; or the target integer is a second integer when the first buffer status report is the second-type buffer status report.

As an embodiment, the first transmitter 902 is configured to: trigger the second-type buffer status report as a response to a first data packet set being valid; and execute a first action set as a response to at least the first data packet set being discarded, where the first action set includes at least one of canceling the second-type buffer status report or canceling the first SR; and the first data packet set includes at least one data packet, and each data packet in the first data packet set is a data packet above a MAC sublayer.

As an embodiment, the first transmitter 902 is configured to determine, as a response to any condition in a first condition set being satisfied, that an SR transmission on a first PUCCH resource is a prioritized SR transmission, where the first PUCCH resource is used for sending the first SR signal; the first condition set includes at least a first condition and a second condition; the first condition is that the first PUCCH resource does not overlap with any SL-SCH resource and the first PUCCH resource does not overlap with any UL-SCH resource; and the second condition includes that the first PUCCH resource overlaps with a second resource block, where the second resource block is used for shared channel transmission.

As an embodiment, the first receiver 901 includes the antenna 452, the receiver 454, the multi-antenna receiving processor 458, the receiving processor 456, the controller/processor 459, the memory 460, and the data source 467 in FIG. 4 of this application.

As an embodiment, the first receiver 901 includes the antenna 452, the receiver 454, the multi-antenna receiving processor 458, and the receiving processor 456 in FIG. 4 of this application.

As an embodiment, the first receiver 901 includes the antenna 452, the receiver 454, and the receiving processor 456 in FIG. 4 of this application.

As an embodiment, the first transmitter 902 includes the antenna 452, the transmitter 454, the multi-antenna transmitting processor 457, the transmitting processor 468, the controller/processor 459, the memory 460, and the data source 467 in FIG. 4 of this application.

As an embodiment, the first transmitter 902 includes the antenna 452, the transmitter 454, the multi-antenna transmitting processor 457, and the transmitting processor 468 in FIG. 4 of this application.

As an embodiment, the first transmitter 902 includes the antenna 452, the transmitter 454, and the transmitting processor 468 in FIG. 4 of this application.

### Embodiment 10

Embodiment 10 illustrates a structural block diagram of a processing apparatus used in a first node according to an embodiment of this application, as shown in FIG. 10. In FIG. 10, a processing apparatus 1000 in a first node includes a first receiver 1001 and a first transmitter 1002.

The first receiver 1001 is configured to receive first signaling, where the first signaling indicates a first time length of a first timer; and
the first transmitter 1002 is configured to trigger a first SR as a response to a first buffer status report being triggered; and send a first SR signal after the first SR is triggered, where the first timer is started with the behavior of sending the first SR signal, and whether the first timer is set to the first time length is related to a type of the first buffer status report,

In Embodiment 10, the phrase about whether the first timer is set to the first time length is related to a type of the first buffer status report includes: setting the first timer to the first time length only when the first buffer status report is the former one of the first-type buffer status report and the second-type buffer status report, where a running state of the first timer is used for determining whether to send an SR signal for the first SR; and the first-type buffer status report includes a regular BSR, and the second-type buffer status report is different from the first-type buffer status report.

As an embodiment, the first receiver 1001 is configured to receive second signaling, where the second signaling indicates a second time length of the first timer; and
the behavior about whether to apply the first time length is related to a type of the first buffer status report includes: setting the first timer to the second time length when the first buffer status report is the latter one of the first-type buffer status report and the second-type buffer status report.

As an embodiment, the first transmitter 1002 is configured to: increase a first counter by 1 with the behavior of sending the first SR signal; and initiate a random access procedure as a response to the first counter reaching a target integer, where the target integer is related to the type of the first buffer status report; and the target integer is a first integer when the first buffer status report is the first-type buffer status report; or the target integer is a second integer when the first buffer status report is the second-type buffer status report.

As an embodiment, the first transmitter 1002 is configured to: trigger the second-type buffer status report as a response to a first data packet set being valid; and execute a first action set as a response to at least the first data packet set being discarded, where the first action set includes at least one of canceling the second-type buffer status report or canceling the first SR; and the first data packet set includes at least one data packet, and each data packet in the first data packet set is a data packet above a MAC sublayer.

As an embodiment, the first transmitter 1002 is configured to determine, as a response to any condition in a first condition set being satisfied, that an SR transmission on a first PUCCH resource is a prioritized SR transmission, where the first PUCCH resource is used for sending the first SR signal; the first condition set includes at least a first condition and a second condition; the first condition is that the first PUCCH resource does not overlap with any SL-SCH resource and the first PUCCH resource does not overlap with any UL-SCH resource; and the second condition includes that the first PUCCH resource overlaps with a second resource block, where the second resource block is used for shared channel transmission.

As an embodiment, the first receiver 1001 includes the antenna 452, the receiver 454, the multi-antenna receiving processor 458, the receiving processor 456, the controller/processor 459, the memory 460, and the data source 467 in FIG. 4 of this application.

As an embodiment, the first receiver 1001 includes the antenna 452, the receiver 454, the multi-antenna receiving processor 458, and the receiving processor 456 in FIG. 4 of this application.

As an embodiment, the first receiver 1001 includes the antenna 452, the receiver 454, and the receiving processor 456 in FIG. 4 of this application.

As an embodiment, the first transmitter 1002 includes the antenna 452, the transmitter 454, the multi-antenna transmitting processor 457, the transmitting processor 468, the controller/processor 459, the memory 460, and the data source 467 in FIG. 4 of this application.

As an embodiment, the first transmitter 1002 includes the antenna 452, the transmitter 454, the multi-antenna transmitting processor 457, and the transmitting processor 468 in FIG. 4 of this application.

As an embodiment, the first transmitter 1002 includes the antenna 452, the transmitter 454, and the transmitting processor 468 in FIG. 4 of this application.

### Embodiment 11

Embodiment 11 illustrates a structural block diagram of a processing apparatus used in a second node according to an embodiment of this application, as shown in FIG. 11. In FIG. 11, a processing apparatus 1100 in a second node includes a second transmitter 1101 and a second receiver 1102.

The second transmitter 1101 is configured to send first signaling, where the first signaling indicates a first time length of a first timer; and
the second receiver 1102 is configured to receive a first SR signal.

In Embodiment 11, a first SR is triggered as a response to a first buffer status report being triggered; the first SR signal is sent after the first SR is triggered; a running state of the first timer is used for determining whether to send an SR signal for the first SR; and the first-type buffer status report includes a regular BSR, and the second-type buffer status report is different from the first-type buffer status report.

As an embodiment, as the first SR signal is sent, whether the first timer is started is related to a type of the first buffer status report; the phrase about whether the first timer is started is related to a type of the first buffer status report includes: starting the first timer only when the first buffer status report is the former one of a first-type buffer status report and a second-type buffer status report.

As an embodiment, the first timer is started as the first SR signal is sent, and whether the first timer is set to the first time length is related to a type of the first buffer status report; the phrase about whether the first timer is set to the first time length is related to a type of the first buffer status report includes: setting the first timer to the first time length only when the first buffer status report is the former one of the first-type buffer status report and the second-type buffer status report.

As an embodiment, the phrase about whether the first timer is started is related to a type of the first buffer status report includes: skipping starting the first timer when the first buffer status report is the latter one of the first-type buffer status report and the second-type buffer status report.

As an embodiment, the second transmitter 1101 is configured to send second signaling, where the second signaling indicates a second time length of the first timer; and the behavior about whether to apply the first time length is related to a type of the first buffer status report includes: setting the first timer to the second time length when the first buffer status report is the latter one of the first-type buffer status report and the second-type buffer status report.

As an embodiment, a first counter is increased by 1 as the first SR signal is sent; and a random access procedure is initiated as a response to the first counter reaching a target integer, where the target integer is related to the type of the first buffer status report; and the target integer is a first integer when the first buffer status report is the first-type buffer status report; or the target integer is a second integer when the first buffer status report is the second-type buffer status report.

As an embodiment, the second-type buffer status report is triggered as a response to a first data packet set being valid; and a first action set is executed as a response to at least the first data packet set being discarded, where the first action set includes at least one of canceling the second-type buffer status report or canceling the first SR; and the first data packet set includes at least one data packet, and each data packet in the first data packet set is a data packet above a MAC sublayer.

As an embodiment, it is determined, as a response to any condition in a first condition set being satisfied, that an SR transmission on a first PUCCH resource is a prioritized SR transmission, where the first PUCCH resource is used for sending the first SR signal; the first condition set includes at least a first condition and a second condition; the first condition is that the first PUCCH resource does not overlap with any SL-SCH resource and the first PUCCH resource does not overlap with any UL-SCH resource; and the second condition includes that the first PUCCH resource overlaps with a second resource block, where the second resource block is used for shared channel transmission.

As an embodiment, the second transmitter 1101 includes the antenna 420, the transmitter 418, the multi-antenna transmitting processor 471, the transmitting processor 416, the controller/processor 475, and the memory 476 in FIG. 4 of this application.

As an embodiment, the second transmitter 1101 includes the antenna 420, the transmitter 418, the multi-antenna transmitting processor 471, and the transmitting processor 416 in FIG. 4 of this application.

As an embodiment, the second transmitter 1101 includes the antenna 420, the transmitter 418, and the transmitting processor 416 in FIG. 4 of this application.

As an embodiment, the second receiver 1102 includes the antenna 420, the receiver 418, the multi-antenna receiving processor 472, the receiving processor 470, the controller/processor 475, and the memory 476 in FIG. 4 of this application.

As an embodiment, the second receiver 1102 includes the antenna 420, the receiver 418, the multi-antenna receiving processor 472, and the receiving processor 470 in FIG. 4 of this application.

As an embodiment, the second receiver 1102 includes the antenna 420, the receiver 418, and the receiving processor 470 in FIG. 4 of this application.

A person of ordinary skill in the art may understand that all or some of the steps of the foregoing method may be implemented by a program instructing relevant hardware. The program may be stored in a computer-readable storage medium, such as a read-only memory, a hard disk, or an optical disc. Optionally, all or some of the steps of the foregoing embodiments may alternatively be implemented by using one or more integrated circuits. Correspondingly, the module units in the foregoing embodiments may be implemented in a form of hardware or may be implemented in a form of a software functional module. This application is not limited to a combination of software and hardware in any particular form. The terminal and the UE in this application include, but are not limited to, wireless communication devices such as unmanned aerial vehicles, communication modules on unmanned aerial vehicles, telecontrolled aircrafts, aircrafts, diminutive aeroplanes, mobile phones, tablet computers, notebook computers, in-vehicle communication devices, wireless sensors, network cards, Internet of things terminals, radio frequency identification (RFID) terminals, narrow band Internet of things (NB-IOT) terminals, Machine Type Communication (MTC) terminals, enhanced MTC (eMTC) terminals, data cards, low-cost mobile phones, and low-cost tablet computers. The base station or system device in this application includes, but is not limited to, a wireless communication device such as a macrocellular base station, a microcellular base station, a home base station, a relay base station, a gNB (NR NodeB), a Transmission reception point (TRP).

The foregoing descriptions are merely exemplary embodiments of this application and are not intended to limit the protection scope of this application. Any modification, equivalent replacement, improvement, and the like made within the spirit and principle of the present application should be included in the scope of protection of the present application.

## Claims

1. A first node used for wireless communication, comprising:
a first receiver, configured to receive first signaling, wherein the first signaling indicates a first time length of a first timer; and
a first transmitter, configured to trigger a first SR as a response to a first buffer status report being triggered; and send a first SR signal after the first SR is triggered, wherein with the behavior of sending the first SR signal, whether to start the first timer is related to a type of the first buffer status report; or the first timer is started with the behavior of sending the first SR signal, and whether the first timer is set to the first time length is related to a type of the first buffer status report,
wherein the behavior about whether to start the first timer is related to a type of the first buffer status report comprises: starting the first timer only when the first buffer status report is the former one of a first-type buffer status report and a second-type buffer status report; and the phrase about whether the first timer is set to the first time length is related to a type of the first buffer status report comprises: setting the first timer to the first time length only when the first buffer status report is the former one of the first-type buffer status report and the second-type buffer status report, wherein a running state of the first timer is used for determining whether to send an SR signal for the first SR; and the first-type buffer status report comprises a regular BSR, and the second-type buffer status report is different from the first-type buffer status report.

2. The first node according to claim 1, wherein the behavior about whether to start the first timer is related to a type of the first buffer status report comprises: skipping starting the first timer when the first buffer status report is the latter one of the first-type buffer status report and the second-type buffer status report.

3. The first node according to claim 1 or 2, comprising:
the first receiver, configured to receive second signaling, wherein the second signaling indicates a second time length of the first timer; and
the behavior about whether to apply the first time length is related to a type of the first buffer status report comprises: setting the first timer to the second time length when the first buffer status report is the latter one of the first-type buffer status report and the second-type buffer status report.

4. The first node according to any one of claims 1 to 3, comprising:
the first transmitter, configured to increase a first counter by 1 with the behavior of sending the first SR signal; and initiate a random access procedure as a response to the first counter reaching a target integer,
wherein the target integer is related to the type of the first buffer status report; and the target integer is a first integer when the first buffer status report is the first-type buffer status report; or the target integer is a second integer when the first buffer status report is the second-type buffer status report.

5. The first node according to any one of claims 1 to 4, comprising:
the first transmitter, configured to trigger the second-type buffer status report as a response to a first data packet set being valid; and execute a first action set as a response to at least the first data packet set being discarded, wherein the first action set comprises at least one of canceling the second-type buffer status report or canceling the first SR; and
the first data packet set comprises at least one data packet, and each data packet in the first data packet set is a data packet above a MAC sublayer.

6. The first node according to any one of claims 1 to 5, comprising:
the first transmitter, configured to determine, as a response to any condition in a first condition set being satisfied, that an SR transmission on a first PUCCH resource is a prioritized SR transmission,
wherein the first PUCCH resource is used for sending the first SR signal; the first condition set comprises at least a first condition and a second condition; the first condition is that the first PUCCH resource does not overlap with any SL-SCH resource and the first PUCCH resource does not overlap with any UL-SCH resource; and the second condition comprises that the first PUCCH resource overlaps with a second resource block, wherein the second resource block is used for shared channel transmission.

7. A second node used for wireless communication, comprising:
a second transmitter, configured to send first signaling, wherein the first signaling indicates a first time length of a first timer; and
a second receiver, configured to receive a first SR signal,
wherein a first SR is triggered as a response to a first buffer status report being triggered; the first SR signal is sent after the first SR is triggered; as the first SR signal is sent, whether the first timer is started is related to a type of the first buffer status report; or the first timer is started as the first SR signal is sent, and whether the first timer is set to the first time length is related to a type of the first buffer status report; the phrase about whether the first timer is started is related to a type of the first buffer status report comprises: starting the first timer only when the first buffer status report is the former one of a first-type buffer status report and a second-type buffer status report; and the phrase about whether the first timer is set to the first time length is related to a type of the first buffer status report comprises: setting the first timer to the first time length only when the first buffer status report is the former one of the first-type buffer status report and the second-type buffer status report, wherein a running state of the first timer is used for determining whether to send an SR signal for the first SR; and the first-type buffer status report comprises a regular BSR, and the second-type buffer status report is different from the first-type buffer status report.

8. A method used in a first node for wireless communication for wireless communication, comprising:
receiving first signaling, wherein the first signaling indicates a first time length of a first timer;
triggering a first SR as a response to a first buffer status report being triggered; and sending a first SR signal after the first SR is triggered, wherein with the behavior of sending the first SR signal, whether to start the first timer is related to a type of the first buffer status report; or the first timer is started with the behavior of sending the first SR signal, and whether the first timer is set to the first time length is related to a type of the first buffer status report,
wherein the behavior about whether to start the first timer is related to a type of the first buffer status report comprises: starting the first timer only when the first buffer status report is the former one of a first-type buffer status report and a second-type buffer status report; and the phrase about whether the first timer is set to the first time length is related to a type of the first buffer status report comprises: setting the first timer to the first time length only when the first buffer status report is the former one of the first-type buffer status report and the second-type buffer status report, wherein a running state of the first timer is used for determining whether to send an SR signal for the first SR; and the first-type buffer status report comprises a regular BSR, and the second-type buffer status report is different from the first-type buffer status report.

9. A method used in a second node for wireless communication, comprising:
sending first signaling, wherein the first signaling indicates a first time length of a first timer; and
receiving a first SR signal,
wherein a first SR is triggered as a response to a first buffer status report being triggered; the first SR signal is sent after the first SR is triggered; as the first SR signal is sent, whether the first timer is started is related to a type of the first buffer status report; or the first timer is started as the first SR signal is sent, and whether the first timer is set to the first time length is related to a type of the first buffer status report; the phrase about whether the first timer is started is related to a type of the first buffer status report comprises: starting the first timer only when the first buffer status report is the former one of a first-type buffer status report and a second-type buffer status report; and the phrase about whether the first timer is set to the first time length is related to a type of the first buffer status report comprises: setting the first timer to the first time length only when the first buffer status report is the former one of the first-type buffer status report and the second-type buffer status report, wherein a running state of the first timer is used for determining whether to send an SR signal for the first SR; and the first-type buffer status report comprises a regular BSR, and the second-type buffer status report is different from the first-type buffer status report.
